Europäisches Patentamt

European Patent Office

Office européen des brevets

(19)

(11) Numéro de publication : **0 679 865 A1**

(12) # DEMANDE DE BREVET EUROPEEN

(21) Numéro de dépôt : **95400933.8**

(22) Date de dépôt : **26.04.95**

(51) Int. Cl.⁶ : **G01B 11/275**

(30) Priorité : **28.04.94 FR 9405159**

(43) Date de publication de la demande :
**02.11.95 Bulletin 95/44**

(84) Etats contractants désignés :
**DE ES GB IT**

(71) Demandeur : **MULLER BEM**
**Le Jardin d'Entreprises,**
**Route de Sours**
**F-28000 Chartres (FR)**

(72) Inventeur : **Muller, Patrice**
**le Jardin d'Entreprises,**
**Route de Sours**
**F-28000 Chartres (FR)**
Inventeur : **Coetsier, Paul**
**3, Allée des Bégonias,**
**La Pomponnette**
**F-77500 Pomponne (FR)**
Inventeur : **Douine, Denis**
**1, Avenue Dehollain**
**F-77400 Lagny sur Marne (FR)**

(74) Mandataire : **Kaspar, Jean-Georges**
**c/o Cabinet Tony-Durand**
**77, rue Boissière**
**F-75116 Paris (FR)**

(54) **Dispositif et procédé de contrôle géométrique de véhicules à roues.**

(57)    Un procédé et un dispositif de contrôle géométrique de véhicule comportent des boîtiers ou des bras (100-103) de mesure à fixer aux roues de véhicules, une unité centrale (UC) de commande et de contrôle reliée par des moyens de communication (100a-103a) aux bras (100-103) ou au boîtier de mesure.

Application au contrôle géométrique de véhicules.

FIG.21

EP 0 679 865 A1

L'invention est relative à un dispositif de contrôle géométrique de véhicules à roues, ainsi qu'à un procédé de mise en oeuvre d'un tel dispositif.

On connaît des dispositifs classiques de l'art antérieur, notamment des dispositifs commercialisés sous l'appellation SELECTRONIC (marque déposée) par la Société MULLER BEM de droit français, dans lesquels des signaux électriques, représentatifs de premières informations angulaires de position relative d'une roue par rapport à un chemin d'action unique, sont produits par des composants électriques passifs (du type transformateur différentiel ou potentiomètre) solidarisés aux roues. Ces signaux électriques représentatifs de premières informations angulaires sont ensuite injectés dans un calculateur analogique ou numérique pour déterminer, au moyen d'équations géométriques de type connu en soi, les valeurs relatives au parallélisme de chaque roue du véhicule par rapport à un axe choisi, généralement l'axe géométrique de poussée du véhicule défini comme bissectrice des roues arrière ou l'axe de symétrie du véhicule défini comme droite passant par le milieu de l'essieu avant et le milieu de l'essieu arrière. A titre d'exemple, le document FR 2.436.365 décrit un tel dispositif électromécanique.

On connaît également des dispositifs de contrôle géométrique de véhicules du genre défini par le document US 4.126.943 dans lequel les bras actionneurs des composants électriques passifs sont remplacés par des plaques de base rotatives coopérant avec lesdits composants électriques passifs, des projecteurs lumineux de faisceaux focalisés étant montés sur ces plaques de base.

On connaît enfin d'après le brevet US 5.018.853 des systèmes de contrôle géométrique de véhicules comportant au moins deux boîtiers en regard l'un de l'autre et comportant chacun une source d'émission lumineuse et au moins un récepteur optique situé derrière un moyen de définition d'image du genre fente ou lentille et sensible au rayonnement de la source d'émission lumineuse de l'autre boîtier en regard. Cependant, ces dispositifs connus présentent l'inconvénient selon lequel le faisceau d'un premier boîtier dirigé vers le récepteur optique d'un second boîtier est susceptible de croiser le faisceau du second boîtier dirigé vers le récepteur optique du premier boîtier. Cette interférence de deux rayonnements lumineux impose de faire fonctionner à tour de rôle l'émission de chaque boîtier pendant que le boîtier en regard reste en position de non-émission, cette caractéristique limitant pour une vitesse de traitement d'information donnée le nombre de mesures réalisables en un temps donné.

Les dispositifs connus présentent également l'inconvénient selon lequel l'opérateur est obligé de se livrer à de nombreuses manoeuvres successives en respectant un mode opératoire prédéterminé, ce qui constitue une limitation à la productivité et à l'efficacité de la mise en oeuvre du contrôle géométrique de véhicules.

L'invention a pour but de remédier aux inconvénients de la technique connue, en créant un nouveau dispositif et un procédé de contrôle géométrique de véhicules à roues, dans lesquels le fonctionnement de deux boîtiers en regard peut être simultané et dans lesquels l'opérateur est constamment guidé par le dispositif de contrôle géométrique, et le procédé de contrôle géométrique est entièrement automatisé, à l'exception des opérations de fixation mécanique ou de réglage mécanique qui sont effectuées sur préconisations affichées par des moyens de communication faisant partie du dispositif.

L'invention a pour objet un dispositif de contrôle géométrique de véhicules à roues, du type comportant au moins deux boîtiers en regard l'un de l'autre et comportant chacun au moins une source d'émission lumineuse et au moins un récepteur optique situé derrière un moyen de définition d'image du genre fente ou lentille et sensible au rayonnement de la source d'émission lumineuse de l'autre boîtier en regard, caractérise en ce que : la source d'émission lumineuse d'un premier boîtier définit avec le récepteur optique du deuxième boîtier en regard une première zone spatiale active, la source d'émission lumineuse dudit deuxième boîtier définit avec le récepteur optique dudit premier boîtier une deuxième zone spatiale active et les deux dites zones spatiales actives sont séparées par un espace de largeur prédéterminée pour permettre un fonctionnement simultané des deux boîtiers sans interférence mutuelle.

Selon d'autres caractéristiques de l'invention:
- à l'intérieur de chaque boîtier, une source d'émission lumineuse et un récepteur optique sont montés sur un corps commun conformé pour définir une fenêtre d'émission lumineuse et pour définir une chambre munie d'un masque de définition d'image,
- la source d'émission lumineuse fait partie d'un bloc d'émission lumineuse comportant un circuit électronique d'alimentation et de commande , le récepteur optique faisant partie d'un bloc de réception optique comportant un circuit électronique de traitement du signal engendré par la réception lumineuse,
- le dispositif comporte une unité centrale reliée par des moyens de communication à des boîtiers ou des bras de mesure dont chacun comporte un clavier de commande permettant la commande de l'unité centrale depuis le boîtier ou le bras correspondant,
- au moins un boîtier ou au moins un bras est relié à, et communique avec un plateau de pivotement de roue fournissant un signal de sortie électrique représentatif de la position angulaire d'une roue de véhicule,
- au moins un plateau de pivotement comporte une paire de rouleaux d'entraînement de roue de véhicule, aptes à entraîner ladite roue en rotation de manière à effectuer automatiquement le dévoilage lors du fonctionnement du dispositif,

- le dispositif comporte deux boîtiers de mesure fixés aux roues avant du véhicule et deux bras de mesure fixés aux roues arrière du véhicule,

- le dispositif comporte quatre bras de mesure fixés chacun à une roue du véhicule,

- les moyens de commande du dispositif sont disposés d'une part sur l'unité centrale et d'autre part sur chaque moyen de mesure fixé aux roues du véhicule et les moyens de commande solidarisés aux roues du véhicule comportent une commande de dévoilage,

- le dispositif est programmable et contient un programme résident conformé en arborescence pour, notamment, l'exécution automatique de mesures physiques, la production d'instructions opératoires interactives et l'étalonnage automatique des appareils de mesure,

- sur un écran de visualisation, l'affichage est géré par ledit programme résident, de manière à fonctionner en boucle fermée par émission en temps réel d'instructions opératoires de contrôle géométrique et par réception et affichage en temps réel des mesures physiques et des valeurs calculées en provenance des bras ou des boîtiers de mesure, de manière à indiquer l'état instantané du véhicule contrôle et du dispositif en réponse aux opérations exécutées en suivant la prescription des instructions opératoires,

- des moyens de communication d'information sont gérés par ledit programme résident, de manière à fonctionner en boucle fermée par émission en temps réel d'instructions opératoires de contrôle géométrique et par réception et communication en temps réel de mesures physiques et de valeurs calculées en provenance de bras ou de boîtiers de mesure, de manière à communiquer l'état instantané du véhicule contrôlé et du dispositif en réponse aux opérations exécutées en suivant la prescription des indications opératoires,

- lesdits moyens de communication comportent des moyens de transmission sonore,

- lesdits moyens de communication comprennent une commande vocale interactive,

- le dispositif comporte quatre bras de mesure dont chacun est solidarisé à une roue du véhicule, et dont un bras au moins comporte un bloc caméra muni d'un récepteur optique multidirectionnel et d'une source d'émission lumineuse multidirectionnelle ou de plusieurs sources d'émission lumineuse unidirectionnelles,

- deux bras de mesure sont disposés vers l'extérieur du véhicule,

- deux bras de mesure sont disposés vers l'intérieur du véhicule,

- quatre bras de mesure sont disposés vers l'intérieur du véhicule,

- le dispositif mesure en outre des valeurs géométriques d'angles ou de distances selon au moins une diagonale du quadrilatère défini par les blocs-caméras,

- le véhicule est disposé sur un pont élévateur comportant des plaques de support de roue surélevées pour le passage des chemins d'action des blocs-caméras sous le véhicule ou alternativement pour le passage des blocs-caméras eux-mêmes,

- au moins un bras de mesure est séparable du boîtier fixé à la roue pour être fixé à nouveau à un autre boîtier d'une roue ou de l'autre côté du même boîtier, de manière à disposer un bras de mesure à volonté vers l'intérieur ou l'extérieur du véhicule en fonction de l'encombrement général du véhicule,

- au moins un boîtier comporte plusieurs masques à fentes ou lentilles de définition d'image sur un récepteur optique, notamment un capteur CCD,

- le dispositif comporte des moyens de démarrage à distance ou de téléchargement pour le chargement à distance d'informations en provenance d'une banque de données,

- le dispositif comporte des moyens de télédiagnostic ou de télémaintenance, pour la prise d'informations sur l'état du dispositif par des moyens techniques de télécommunication ou pour la fourniture d'instructions de dépannage

L'invention a également pour objet un procédé de contrôle géométrique de véhicules à roues, comportant les étapes suivantes :

a) saisir des informations d'identification de véhicule et/ou de client,

b) activer une base de données contenant des caractéristiques techniques de véhicules et valider les informations correspondant au véhicule à contrôler,

c) effectuer un contrôle visuel et saisir,

d) mettre en place et fixer à demeure aux roues du véhicule des boîtiers de mesure ou des bras de mesure,

e) effectuer un bilan géométrique comportant un dévoilage assisté par ordinateur, une correction d'assiette assistée par ordinateur, un centrage de la direction assisté par ordinateur et un braquage d'essieu direct ou assisté par ordinateur de manière à déterminer automatiquement le bilan géométrique du véhicule,

Selon d'autres caractéristiques de l'invention :

- le dévoilage est effectué automatiquement par commande de rouleaux d'entraînement en rotation de roue de véhicule,

- la correction d'assiette est effectuée automatiquement par des organes de traction et de maintien agissant sur la carrosserie du véhicule,
- le braquage du volant est commandé par l'ordinateur selon une variation angulaire de braquage prédéterminée dans un sens donné et dans le sens opposé audit sens donné,
- le braquage du volant est commandé selon une vitesse de variation angulaire de braquage prédéterminée au voisinage des extrémités de la plage totale de braquage,
- un bilan géométrique est automatiquement communiqué à l'opérateur par des moyens techniques de communication sur achèvement de l'étape e),

Une autre variante de procédé selon l'invention comporte des étapes suivantes :

f) effectuer un dévoilage assisté par ordinateur et une correction d'assiette assistée par ordinateur,

g) régler des caractéristiques physiques et géométriques du véhicule en étant assisté par des instructions communiquées par un ordinateur qui communique simultanément des informations représentatives des variations desdites caractéristiques physiques et géométriques en temps réel pendant ledit réglage,

Selon d'autres caractéristiques de cette variante de l'invention :

- on règle notamment le décalage des roues de l'essieu avant ("setback avant") ou le décalage des roues de l'essieu arrière ("setback arrière"),
- on effectue des étapes d'étalonnage assisté par ordinateur des zéros des capteurs et de vérification assistéels par ordinateur des gains des capteurs, et des étapes d'étalonnage assisté par ordinateur des caractéristiques géométriques du pont de levage ou poste de travail supportant le véhicule.

Selon encore une autre variante de l'invention, on effectue, à l'aide d'un dispositif comportant au moins un bloc-caméra à plusieurs masques ou plusieurs fentes ou plusieurs moyens de définition d'image, des étapes de mesure et de contrôle dimensionnel de véhicule, en particulier de contrôle dimensionnel de carrosserie du véhicule,

Selon d'autres caractéristiques de cette autre variante de l'invention :

- on solidarise au moins trois blocs-caméras à une base de référence prédéterminée,
- on utilise au moins un bloc-caméra comportant un masque portant deux fentes définissant une croix, de manière à mesurer les angles et les distances suivant l'horizontale et suivant la verticale,
- on étalonne l'environnement du véhicule, pour choisir une base de référence ou alternativement pour vérifier la géométrie d'une base de référence prédéterminée,

- on fixe un émetteur lumineux en relation fixe connue par rapport à un point de référence à contrôler,
- on fixe un rétroréflecteur de forme polyédrique en relation fixe connue par rapport à un point de référence à contrôler.

L'invention sera mieux comprise grâce à la description qui va suivre donnée à titre d'exemple non limitatif en référence aux dessins annexés dans lesquels :

La figure 1 représente schématiquement une vue en coupe d'un dispositif selon l'invention.

La figure 2 représente schématiquement en vue de dessus, avec coupe partielle des boîtiers, un premier mode de réalisation d'un dispositif selon l'invention en position montée sur les roues d'un véhicule.

La figure 3 représente schématiquement en perspective une vue générale d'un dispositif selon l'invention en position non montée.

La figure 4 représente schématiquement un diagramme fonctionnel d'un dispositif selon l'invention.

La figure 5 représente schématiquement un exemple d'arborescence des programmes mettant en oeuvre l'invention.

Les figures 6 à 20 représentent schématiquement des pages d'écran conversationnelles d'instructions de guidage de l'opérateur d'un dispositif selon l'invention.

La figure 21 représente schématiquement en vue de dessus un autre mode de réalisation de l'invention.

La figure 22 représente schématiquement une vue de côté d'un dispositif selon l'invention en position montée.

La figure 23 représente schématiquement une vue de face d'un dispositif selon l'invention correspondant aux figures 21 et 22, ou aux figures 27 et 28.

La figure 24 est un schéma géométrique représentatif des angles de parallélisme à déterminer.

La figure 25 est une vue partielle en perspective d'un ensemble boîtier de dispositif selon l'invention.

La figure 26 représente schématiquement en perspective un ensemble caméra qui est une variante de réalisation de la figure 25.

Les figures 27 et 28 représentent schématiquement en vue de dessus et en vue latérale un autre mode de réalisation de l'invention.

La figure 29 représente schématiquement un mode de réalisation d'une caméra de boîtier de dispositif selon l'invention.

La figure 30 représente schématiquement une variante de réalisation de récepteur optique selon l'invention apte à être monté dans une caméra du type de celle de la figure 29.

La figure 31 représente un rétroréflecteur polyédrique.

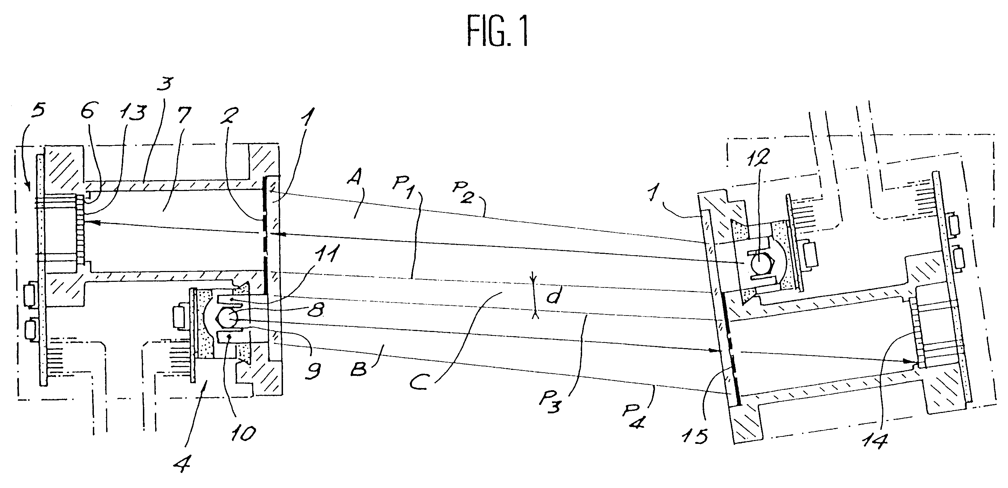

En référence à la figure 1, un dispositif de contrôle géométrique de véhicules à roues comporte au moins deux boîtiers en regard l'un de l'autre, boîtiers du type général décrit dans la demande de brevet français 93.12059 du 11 Octobre 1993 et de la demande de brevet français 93.12526 du 20 Octobre 1993 au nom de la Société déposante, non publiées à la date de dépôt de la présente demande.

En ce qui concerne le parallélisme, les appareils de mesure importants sont les blocs caméras dont le principe a été décrit dans la demande de brevet français 93.12059 précitée et dont le montage a été décrit en référence à la demande de brevet français 93.12526 précitée. Dans cet exemple de réalisation de la présente invention, deux blocs caméras dont chacun est solidaire d'un boîtier d'un dispositif selon l'invention, sont disposés en regard l'un de l'autre de manière à faire coopérer l'émetteur optique d'un premier boîtier avec le récepteur optique du second boîtier, et réciproquement.

Par rapport à l'état de la technique connu, les blocs caméras qui sont des appareils de mesure optique sans contact et sans mouvement mécanique évitent l'utilisation des appareils de l'art antérieur comprenant des composants électriques passifs avec un bras d'actionnement ou une plaque de base rotative. La précision de mesure est grandement améliorée : elle est de l'ordre de 1 minute d'angle sur la plage centrale de mesure, dont l'amplitude est de l'ordre de + ou - 5 degrés angulaires sexagésimaux.

Les avantages du système à fentes multiples ont été amplement décrits dans la demande de brevet français 93.12059, à laquelle il convient de se rapporter pour constater que les systèmes à blocs caméras procurent une étendue de mesure importante permettant le braquage des roues du véhicule en cours de mesure.

Un premier bloc caméra est réalisé par assemblage d'une vitre 1 réalisée en matière synthétique teintée infrarouge et dont les deux surfaces principales sont polies et parfaitement planes, d'un masque 2 comportant trois fentes parallèles espacées l'une de l'autre d'environ quatre millimètres, d'un corps principal 3 supportant à la fois un ensemble d'émission optique 4 et un ensemble de réception optique 5. Le corps principal 3 est conformé en chambre limitée à une extrémité par le masque 2 comportant au moins une fente et à l'autre extrémité par une carte électronique portant un capteur optique du genre CCD, ladite carte électronique assurant simultanément la fonction d'obturation mécanique et le capteur optique CCD venant s'insérer exactement dans une rainure 6 du corps principal 3 de manière à réaliser une étanchéité aux poussières et une obturation pratiquement parfaite de la chambre 7 définie à l'intérieur du corps 3.

L'ensemble d'émission optique 4 comporte une lampe flash 8 disposée à l'extrémité d'une potence 9 constituée dans un bloc portant une carte électronique d'alimentation et de commande d'émission lumineuse et délimitée par deux évidements 10 et 11, de manière à assurer une bonne évacuation thermique de part et d'autre de la potence 9 et de la lampe flash 8 d'une puissance instantanée de 1000 watts. Cette disposition mécanique générale permet un remplacement rapide du bloc 4 d'émission lumineuse ou du bloc 5 de réception lumineuse. Les circuits électroniques de commande et de contrôle et d'alimentation individuels d'émission lumineuse et de réception lumineuse sont de type connu ou équivalent à ceux préconisés par les fournisseurs de capteurs optiques ou de lampes d'émission optique et ne seront pas décrits plus avant.

Selon l'invention, une source d'émission lumineuse 12 définit avec le récepteur optique 13 disposé en regard de la source d'émission lumineuse 12 mais appartenant à l'autre boîtier disposé en regard du premier boîtier portant la source lumineuse 12, une première zone spatiale active A délimitée par deux plans P1 et P2 joignant les bords respectifs de la fenêtre d'émission lumineuse de la source 12 et les bords respectifs du masque situé en avant du capteur CCD 13. Une deuxième source lumineuse 8 appartenant au deuxième boîtier (portant le capteur CCD 13 précité) définit avec le capteur CCD 14 du premier boîtier une deuxième zone spatiale active B délimitée par deux plans P3 et P4, les plans P3 et P4 passant également par les bords respectifs de la fenêtre de la source lumineuse 8 et les bords du masque 15 placés en amont du capteur CCD 14 dudit premier boîtier. Les plans P1 et P3 définissent un espace C de largeur prédéterminée d suffisant à éviter toute interférence entre l'émission d'un émetteur optique d'un premier boîtier et l'émission d'un émetteur optique d'un second boîtier. Ainsi, grâce à l'invention, les émissions lumineuses des deux boîtiers peuvent être actives simultanément ce qui évite toute interférence et permet d'obtenir un nombre maximal de mesures uniquement limitées par la capacité de traitement d'informations du dispositif selon l'invention.

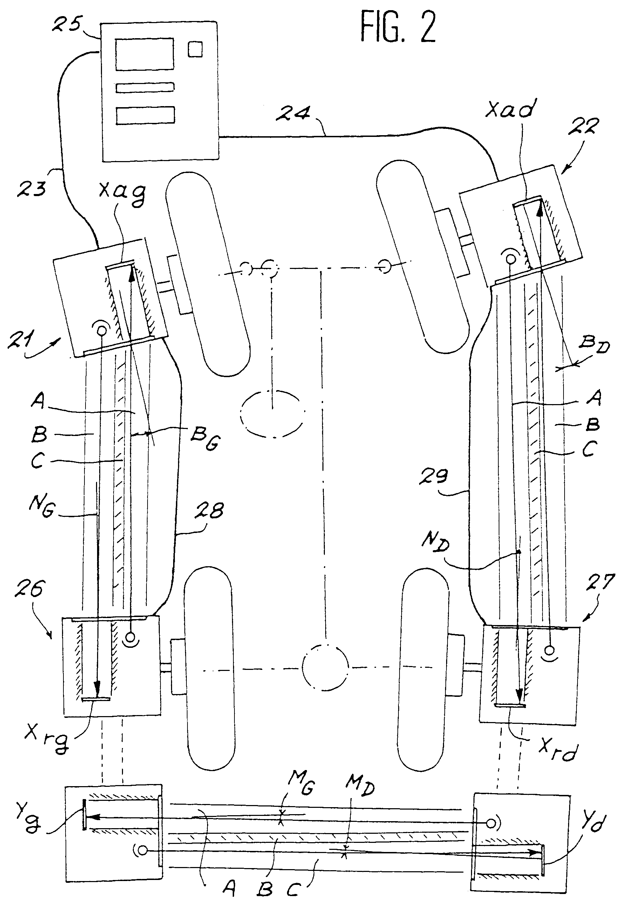

En référence à la figure 2, un dispositif selon l'invention comporte un montage de six blocs-caméras contenus dans des boîtiers solidarisés par des griffes aux jantes des roues du véhicule selon une configuration conforme à la demande de brevet français 93.12617 du 22 Octobre 1993 à laquelle il convient de se rapporter pour une explication plus détaillée.

Les boîtiers 21 et 22 sont reliés par liaisons de communication 23 et 24 à une unité centrale mobile 25 comportant un programme de contrôle et de commande apte à guider l'opérateur selon un procédé de contrôle géométrique qui sera décrit ci-après.

Les boîtiers de mesure 21 et 22 sont reliés aux bras de mesure 26 et 27 fixés aux roues arrière du véhicule et comportant chacun deux blocs caméras au moyen de liaisons de communication 28 et 29. Les liaisons de communication 23, 24, 28 et 29 sont des liaisons filaires permettant le passage de signaux électriques analogiques ou numériques et le dialogue de chaque boîtier ou bras de mesure indépendant avec l'unité centrale mobile 25.

Bien entendu, l'invention couvre également la variante de réalisation dans laquelle les liaisons 23, 24, 28 et 29 sont des liaisons de communication dites "sans fil", c'est-à-dire de type hertzien, de type à transmission par rayonnement infra-rouge, ou tout autre moyen de transmission d'informations à distance.

Chaque émetteur optique d'un boîtier émet en direction du récepteur optique d'un autre boîtier en regard conformément à la structure du montage mécanique expliqué en détail à la figure 1 prévoyant, au niveau de chaque zone située entre boîtiers en regard, la séparation des zones spatiales actives A et B par un espace C de largeur prédéterminée, choisie de préférence supérieure à 4 mm.

Bien entendu, l'invention couvre également le cas d'un espace C de largeur inférieure à 4mm, dans le cas où les boîtiers en regard sont relativement rapprochés l'un de l'autre.

Connaissant les distances de déflexion $X_{ag}$, $X_{ad}$, $X_{rg}$, $X_{rd}$, $Y_g$ et $Y_d$ on détermine par un calcul trigonométrique des angles constituant une première information angulaire $B_G$, $B_D$, $N_G$, $N_D$, $M_G$, $M_D$ analogues à ceux décrits en référence à la demande de brevet français 93.12617 précitée au moyen des formules suivantes :

$$B_G = \text{Arctg}\,\frac{X_{ag}}{f}$$

$$B_D = \text{Arctg}\,\frac{X_{ad}}{f}$$

$$N_G = \text{Arctg}\,\frac{X_{rg}}{f}$$

$$N_D = \text{Arctg}\,\frac{X_{rd}}{f}$$

$$M_G = \text{Arctg}\,\frac{Y_g}{f}$$

$$M_D = \text{Arctg}\,\frac{Y_d}{f}$$

où f est la distance focale entre la fente active du masque à fente de la caméra et la cellule ou le pixel constituant le zéro de référence du détecteur CCD et correspondant à un rayon d'incidence normale au plan de la fente active du masque à fente correspondant.

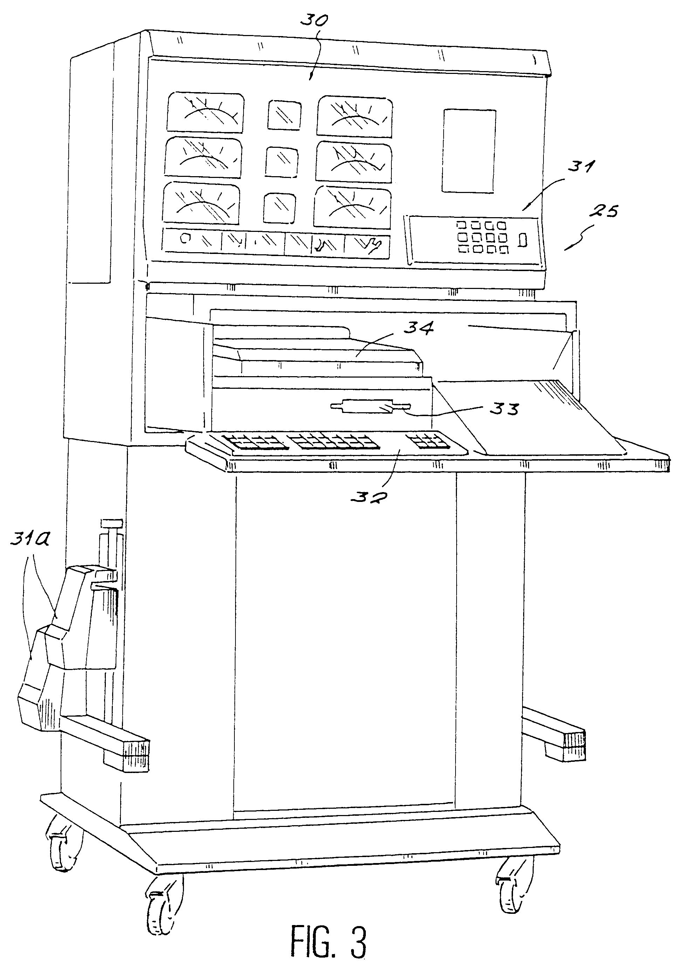

En référence à la figure 3, un dispositif selon l'invention est représenté en position démontée : l'unité centrale mobile 25 comprend un écran vidéo couleur 30 de type SVGA monté sur un support commun portant également un clavier 31 à touches permettant l'accès direct aux fonctions programmées et utilisable en service normal par l'opérateur de contrôle géométrique ; un clavier 32 à 102 touches permettant le dialogue avec une unité centrale du type PC 386 contenue dans le support commun, un lecteur 33 de disquettes 3 pouces ½. Bien entendu, l'invention s'applique également à toute unité centrale comportant un moyen de mémorisation ou de traitement d'informations disponibles à la date de dépôt de la présente demande : à titre d'exemples non exhaustifs, on pourra citer les mémoires magnétiques à bulles, les mémoires flash, les disques de stockage numérique connus sous l'appellation CD ROM, les détectants d'identifiants intégrés du type cartes à puces, codes barres, ou autres marquages susceptibles d'être lus au moyen d'un détecteur ou d'un stylographe optique.

Les moyens de sortie d'information comprennent une imprimante de type connu en soi ; mais, bien entendu, l'invention couvre également tout autre moyen de communication d'information sur un support lisible, sur support magnétique (carte magnétique), sur un support électronique (carte à puce) ou sur un support d'affichage visuel ou d'annonce vocale.

L'unité centrale mobile de la figure 3 peut également comprendre un système utilisateur multi-postes à télécommande par infra-rouge permettant d'effectuer toutes les opérations à distance et commercialisé depuis plusieurs années par la Société MULLER BEM de droit français sous l'appellation BILANMATIC.

Le support commun est un châssis muni de roulettes portant également des têtes de mesure qui comportent chacune un clavier de commande à touches 31a équivalent au clavier 31 adjacent à l'écran vidéo couleur 30.

Une variante de réalisation de l'invention est présentée sous son aspect extérieur dans le catalogue édité par la Société MULLER BEM de droit français sous l'appellation MULLER Catalogue 46 qui est accessible au public à la date de dépôt de la présente demande.

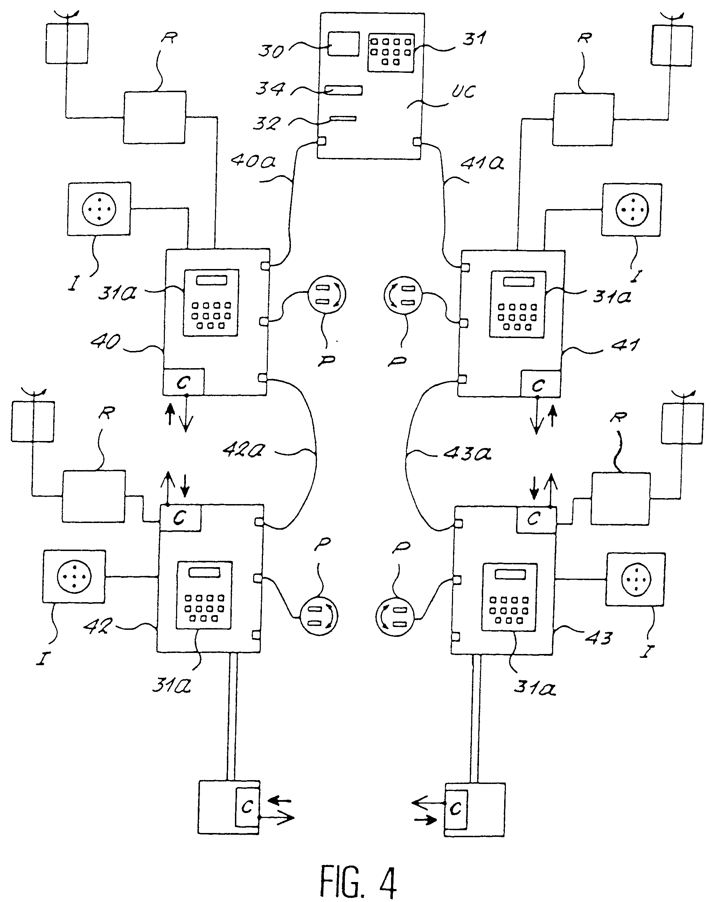

En référence à la figure 4, un dispositif selon l'invention est représenté en état d'acquisition de données. A cet effet, l'unité centrale UC est reliée à deux boîtiers ou deux bras de mesure 40 et 41 par des liaisons filaires 40a et 41a constituant un bus de transmission de données. Les boîtiers de mesure 40 et 41 sont reliés à des bras de mesure 42 et 43 par d'autres liaisons filaires 42a et 43a. Bien entendu, l'invention s'applique également au cas de transmissions entre unité centrale et tête de mesure par des moyens de transmission sans fil, par exemple de transmission de données infra-rouge ou à haute fréquence ou d'autres systèmes de transmission optique ou sonore.

Selon un premier mode de réalisation, l'action de commande par appui sur une touche de n'importe quel clavier 31 ou 31a de commande du dispositif rend ce clavier 31 ou 31a maître du dispositif et permet de faire fonctionner le dispositif dans toutes les fonctionnalités depuis ce clavier 31 ou 31a. Selon un deuxième mode de réalisation, l'accès au clavier 31 ou 31a est prédéterminé, de sorte qu'une priorité de fonctionnement est acquise à certains claviers 31 ou 31a par rapport à d'autres claviers 31 ou 31a.

Selon un troisième mode de réalisation, le clavier 31 ou 31a est activé par insertion d'une carte de reconnaissance, du genre carte magnétique, carte à puce, ou autre moyen constituant une clé d'accès.

Des blocs caméra C émettent chacun en direction d'un autre bloc caméra C qui leur fait face et reçoivent de ce bloc caméra C en regard une émission lumineuse de manière analogue à ce qui a été décrit en référence aux figures 1 et 2.

Les boîtiers de mesure 40 à 43 comportent des fiches de connexion électrique permettant le raccordement des liaisons filaires 40a, 41a, 42a, et 43a ainsi que le raccordement à des plateaux P de pivotement des roues produisant un signal électrique de la position de rotation de la roue. Les boîtiers 40 à 43 contiennent chacun un bloc de repérage dans l'espace constitué par la combinaison d'un circuit électronique d'inclinomètre I portant directement une ampoule de type connu comportant cinq électrodes et un circuit R de traitement du signal électrique fourni par un potentiomètre indiquant la rotation de la roue correspondante et utilisé en particulier lors des opérations de dévoilage.

A cet effet, les plateaux de pivotement P comportent des rouleaux d'entraînement susceptibles d'entraîner les roues du véhicule en rotation lors du contrôle géométrique du véhicule afin d'assurer le dévoilage automatique de ces roues lors des mesures de contrôle géométrique.

L'invention procure ainsi un système entièrement automatisé de contrôle géométrique, dont la mise en oeuvre est semi-automatique car les seules actions à effectuer par l'opérateur effectuant le contrôle géométrique lui sont expressément indiquées à chaque fois par l'écran d'affichage 30 en fonction de la séquence de contrôle géométrique à effectuer.

Les systèmes de conversion analogique/numérique et d'interfaçage d'entrée et sortie ne sont pas décrits plus avant dans la mesure où ces systèmes sont de type conventionnel et évoluent avec les produits commercialisés sur le marché. Les systèmes d'interfaçage à mémoire peuvent être notamment du type mémoire morte programmable et effaçable électriquement (EEPROM), mémoire morte programmable (PROM), mémoire à accès direct (RAM), micro-processeur d'interface et de commande ou DSP (processeur de traitement de signal numérique) permettant le téléchargement de nouveaux programmes ou de bases de données provenant des constructeurs ou extraites de banques de données provenant des constructeurs d'automobiles, le télédiagnostic, le stockage de masse sur un support de grande capacité notamment du type CD ROM, le contrôle d'identité de l'opérateur au moyen d'identifiants intégrés directement au véhicule (puce dissimulée dans la carrosserie) ou de moyens de reconnaissance usuels (cartes à puces, codes barres ou autres moyens). L'application de ces nouveaux produits du commerce aux fonctions générales de l'invention ne sort pas du cadre de la présente invention.

En ce qui concerne les parties internes aux boîtiers 40 à 43, tels que potentiomètre R, inclinomètre I et bloc caméra C, il convient de se rapporter pour les détails structurels à la demande FR 93.12526, non publiée.

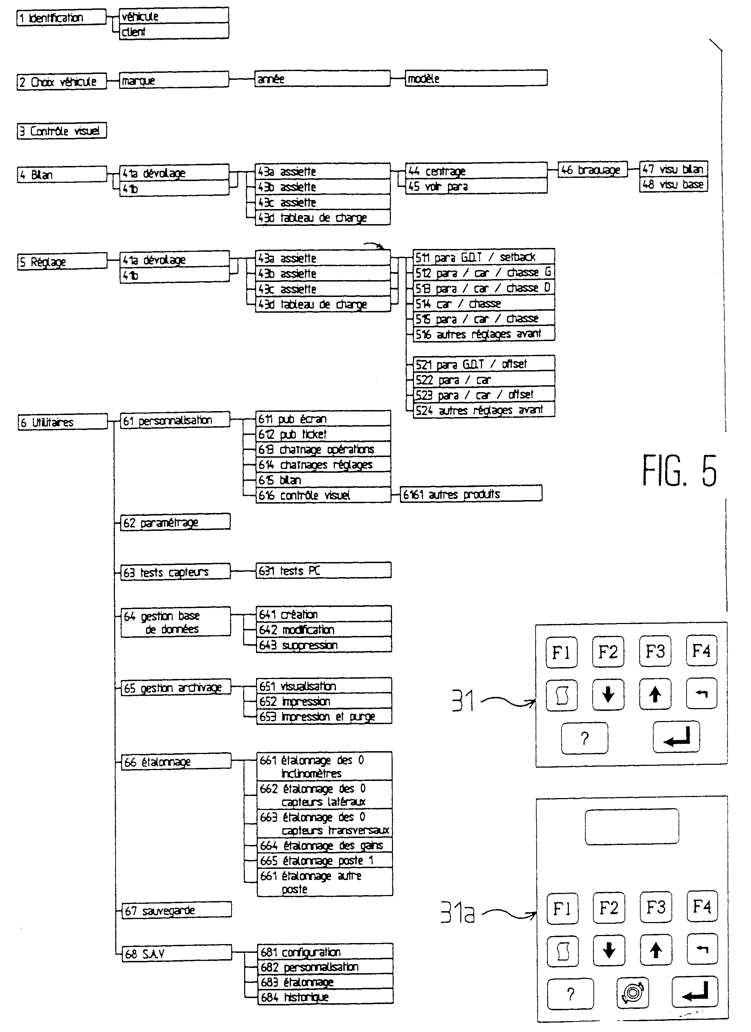

En référence à la figure 5, un organigramme général du programme de fonctionnement de l'unité centrale interagissant avec les têtes de mesure ou les bras de mesure est représenté. L'invention s'applique également à tout autre programme équivalent correspondant notamment à l'installation de deux bras de mesure sur le même essieu du véhicule, l'installation de deux bras sur un essieu et de deux boîtiers sur l'autre essieu et l'installation de quatre bras de mesure sur les deux essieux du véhicule. Le déroulement du programme et des étapes du procédé de contrôle géométrique correspondant se fait par appui d'un doigt de l'opérateur sur les touches d'un clavier de commande 31 ou 31a de type précité. Les claviers de commande 31a comportent une fenêtre d'affichage LCD (affichage à cristaux liquide) et dix touches dont les fonctions ont été prédéfinies et sont redéfinissables à chaque instant, ainsi qu'une touche spécifique de dévoilage.

Le clavier de commande 31 ne comporte pas de fenêtre d'affichage et comporte dix touches fonctionnellement équivalentes aux dix touches des claviers 31a.

Le programme UTILITAIRES comporte des programmes 63 de calibration et de tests des capteurs de boîtiers ainsi qu'un programme d'étalonnage 66 comprenant lui-même un programme 661 d'étalonnage de zéros , un programme 665 d'étalonnage d'un premier poste A de contrôle géométrique et un autre programme 666 d'étalonnage d'un autre poste B de contrôle géométrique. Ces programmes permettent de calibrer les appareils de mesure et également de mesurer les défauts des postes de contrôle géométrique relativement au plan horizontal, vertical et à une localisation spatiale des appuis des roues du véhicule pendant le contrôle géométrique (plaques de pivotement, plaques de débattement, rouleaux de dévoilage,...).

L'étalonnage de l'environnement du dispositif de contrôle géométrique,(environnement comprenant le pont élévateur ou plancher équivalent sur lequel est posé le véhicule et le dispositif de contrôle géométrique lui-même) étant réalisé, l'opérateur de contrôle peut après avoir fait défiler sur l'écran les publicités relatives au centre de contrôle géométrique particulier où se trouve installé le dispositif de contrôle géométrique, procéder à l'IDENTIFICATION du véhicule à l'aide d'un programme d'identification dans lequel il est guidé pas à pas : l'opérateur indique par exemple le numéro d'immatriculation du véhicule, le type, le numéro du châssis, le kilométrage du compteur, le numéro de l'ordre de réparation, et sa propre identité de technicien. L'opérateur procède simultanément à l'identification du client par son nom, son adresse postale et ses références de télécommunication (téléphone, télécopie, télex,..). Après avoir effectué la saisie des données disponibles, l'opérateur valide cette saisie pour passer à l'étape suivante. Alternativement, suivant une variante préférée de réalisation, l'opérateur interroge directement d'après le nom du client la base de données interne du dispositif pour remplir immédiatement sa page d'écran par recherche dans la base de données construite progressivement par apprentissage.

L'opérateur passe ensuite à la mise en oeuvre du deuxième programme intitulé CHOIX DU VEHICULE. A cet effet, l'opérateur revient à l'écran de choix principal et choisit le deuxième programme par défilement à l'aide d'un appui sur une touche comportant une flèche du clavier de commande 31, il appuie ensuite sur la touche validation d'entrée, ce qui produit l'affichage à l'écran de la liste des bases de données des constructeurs disponibles dans le dispositif. La touche F2 permet d'accéder à une autre base de données personnelle, la touche F3 permet de remonter à la page d'écran précédente et la touche F4 permet d'accéder à la page d'écran suivante. La validation du constructeur automobile de la voiture fait apparaître automatiquement les années modèle que l'on fait défiler au moyen des touches fléchées pour choisir l'année modèle correspondant au véhicule à contrôler. Le choix de l'année modèle fait ensuite apparaître la liste des véhicules de la marque automobile considérée correspondant à cette année modèle. L'opérateur choisit alors le véhicule dans la liste disponible dans la base de données constructeur et mémorise toutes ces informations en validant à l'aide de la touche de validation.

Après avoir effectué l'identification à l'aide du premier programme et le choix du véhicule à l'aide du deuxième programme, l'opérateur choisit et valide le troisième programme de CONTROLE VISUEL. Cette validation produit l'affichage de pages d'écran successives que l'opérateur remplit tout en effectuant le contrôle visuel pendant le remplissage. Les caractéristiques relevées sont relatives à l'immatriculation, à l'état des châssis et éléments de châssis, de l'alimentation en carburant, du système d'échappement, du système de suspension des essieux, du système de direction, du système de freinage, du système de transmission, du système d'éclairage et de signalisation, de l'état des roues et des pneus, de l'état de la carrosserie, de l'état de l'équipement et divers autres points du véhicule ainsi que le commentaire additionnel pertinent.

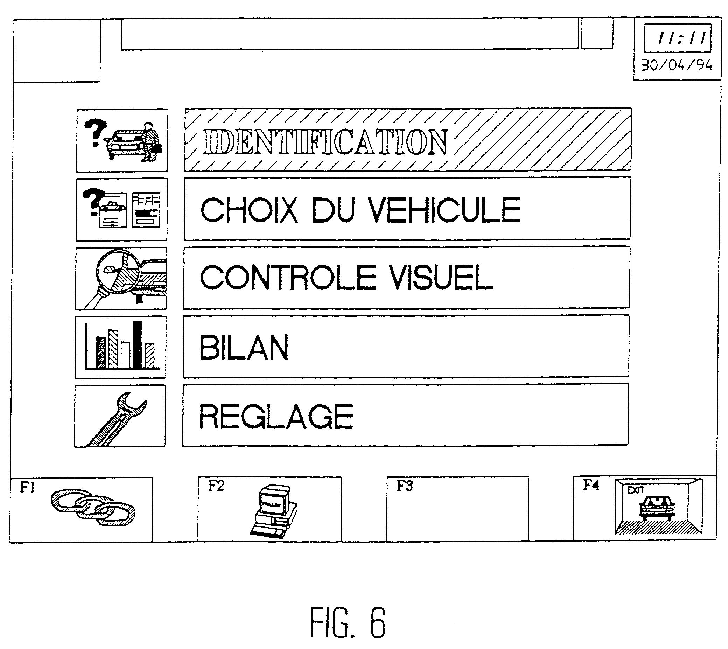

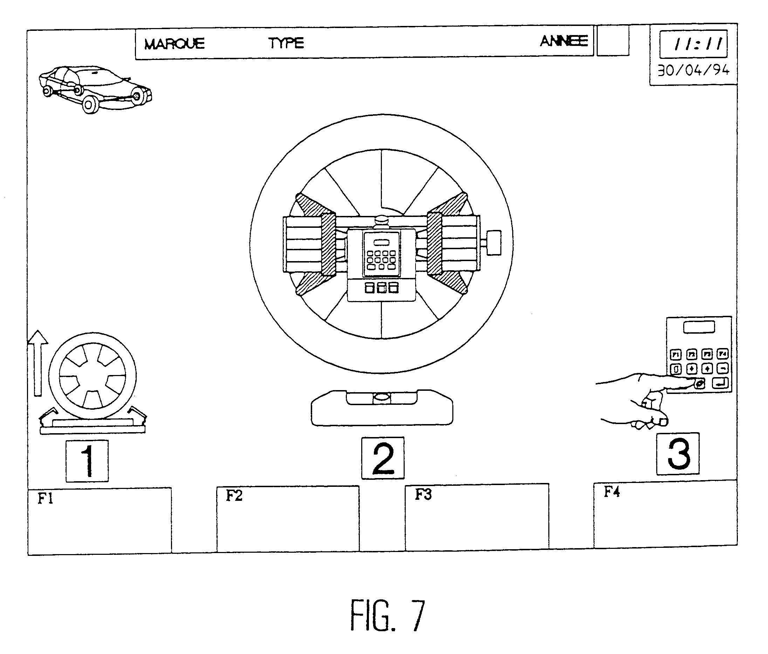

Les pages d'écran suivantes relatives aux vérifications précitées se subdivisent elles-mêmes en autres pages d'écran : par exemple, pour effectuer le contrôle visuel des roues et des pneus, la validation de ce choix entraîne l'apparition d'une nouvelle page d'écran demandant la saisie d'indications telles que la conformité de montage des pneumatiques, l'état des pneumatiques, la pression des pneumatiques, l'état des roues, l'état des roulements de roues. Les défauts éventuels à saisir sont précaractérisés dans la base de données du dispositif, de sorte que les touches de fonction prédéfinies apparaissant à l'écran permettent de saisir et de faire défiler tous les défauts caractéristiques susceptibles d'être contrôlés visuellement. La validation après saisie des indications relatives au sous-programme de contrôle visuel de l'état des roues et des pneumatiques entraîne automatiquement l'apparition d'une page vide de COMMENTAIRES que l'opérateur peut remplir optionnellement. Ces commentaires optionnels particuliers sont de préférence saisis au moyen du clavier 32 à 102 touches de la figure 3. Après avoir effectué le contrôle visuel en sélectionnant la ligne correspondante de la page d'écran introductive représentée à la figure 6, l'opérateur passe à l'étape suivante pour l'exécution du quatrième programme correspondant à l'établissement d'un BILAN géométrique du véhicule. Le choix du programme BILAN entraîne l'apparition d'une image d'écran correspondant à la figure 7 correspondant à l'exécution automatique ou semi-automatique du dévoilage de la roue. A cet effet, la roue à dévoiler est repérée par une couleur différente sur le schéma de véhicule situé dans le coin supérieur gauche de l'écran. Dans une première variante de réalisation, l'opérateur tourne la roue d'un angle prédéterminé, par exemple 180°, tout en maintenant le boîtier ou le bras fixé à la roue du véhicule horizontal. A cet effet, l'opérateur a desserré le bouton de solidarisation du boîtier ou du bras à la jante de la roue à dévoiler, pour permettre à la roue de tourner tandis que le boîtier ou le bras demeure sensiblement horizontal. Selon l'invention, l'angle de rotation de la roue est indiqué en temps réel par une image tournante repérée 1 sur l'écran de la figure 7 et correspond à l'angle mesuré par le potentiomètre du boîtier ou du bras de la roue correspondante, le degré d'horizontalité est indiqué par l'image comportant une bulle mobile repérée 2 sur la figure 7 qui reproduit directement à l'écran les mesures effectuées par l'inclinomètre I de la figure 4. Ainsi, l'opérateur dispose en temps réel à l'écran d'un moyen de guidage pas à pas lui indiquant la suite des opérations à effectuer et reproduisant en temps réel les mesures physiques effectives correspondant à la position de la roue en cours de dévoilage et du boîtier ou du bras de cette roue. Après avoir effectué la rotation selon l'angle prédéterminé précité, la rotation de la roue est indiquée à l'écran et l'angle prédéterminé est affiché dès que l'opérateur a tourné la roue selon un angle correspondant à 5° près à cet angle : cette disposition est prévue dans la demande de brevet français 93.12526, non publiée. Ceci présente l'avantage de ne pas devoir rechercher une position précise pour effectuer le dévoilage. Dès que l'angle est affiché, l'opérateur appuie sur la touche centrale inférieure de dévoilage du boîtier 31a, l'écran lui indique l'acquisition des données correspondant à cette valeur qui, avec la mémorisation des valeurs correspondant à la position de départ, permet de déterminer une valeur satisfaisante de la courbe de voile de la roue.

Bien entendu, l'invention couvre également le cas où le dévoilage de la roue s'effectue en plusieurs points de manière à augmenter la précision du dévoilage.

Selon une deuxième variante de l'invention, le dévoilage est entièrement automatisé. A cet effet, on prévoit d'entraîner la roue du véhicule par l'intermédiaire des rouleaux situés sur les plateaux P de pivotement décrits en référence à la figure 4, de manière à entraîner automatiquement la roue et à déterminer en continu les caractéristiques de dévoilage en fonction de la rotation de la roue. Bien entendu, l'invention couvre également le cas dans lequel les roues du véhicule sont situées sur les plaques de débattement à deux libertés de translation équipées de rouleaux d'entraînement de la roue à dévoiler. Cette opération de dévoilage est effectuée pour chaque roue du véhicule que la base de données du constructeur commande de dévoiler.

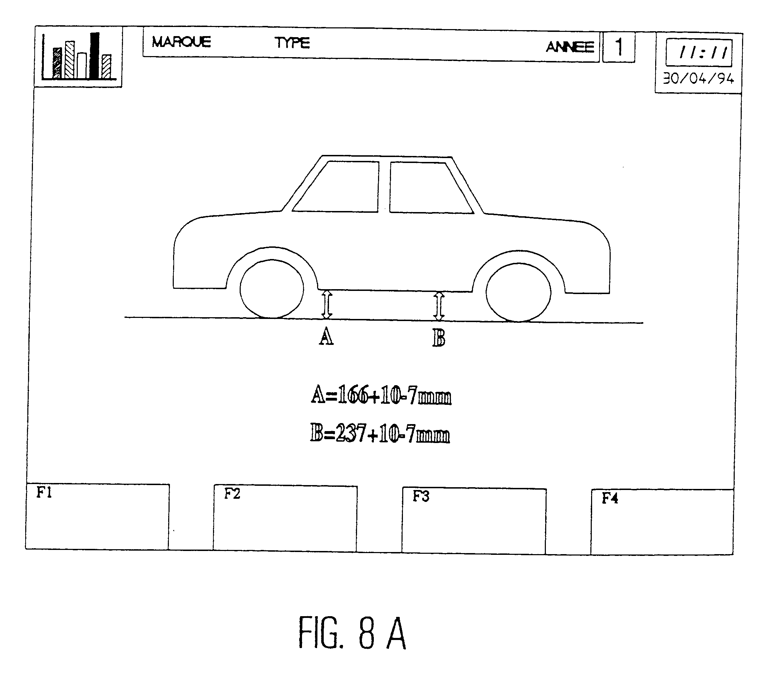

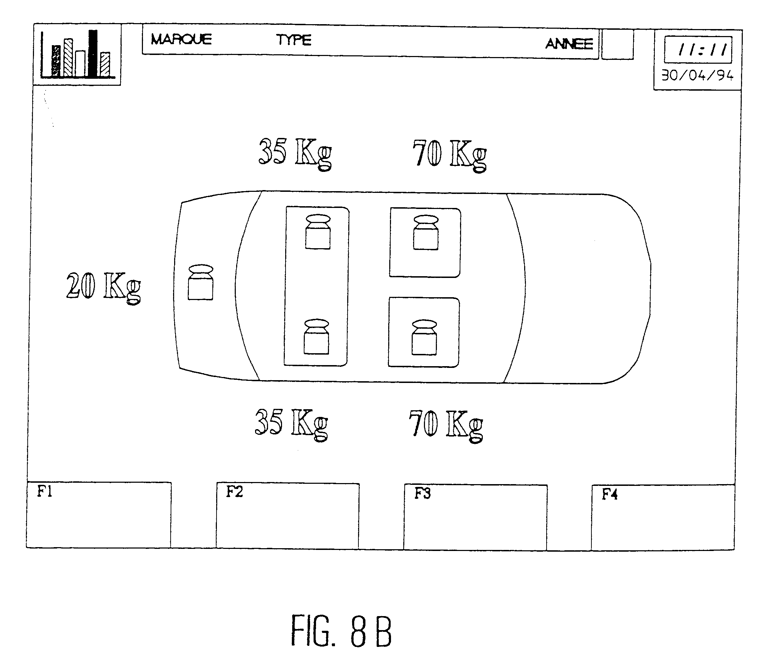

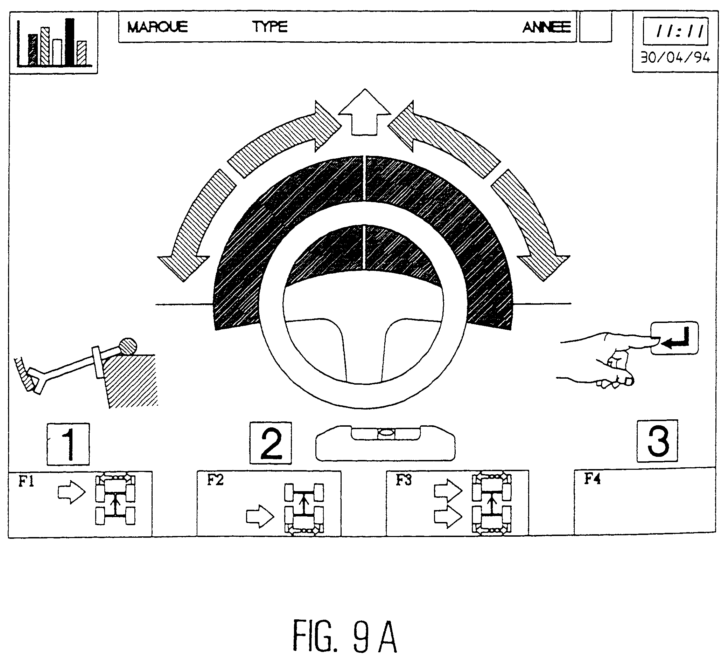

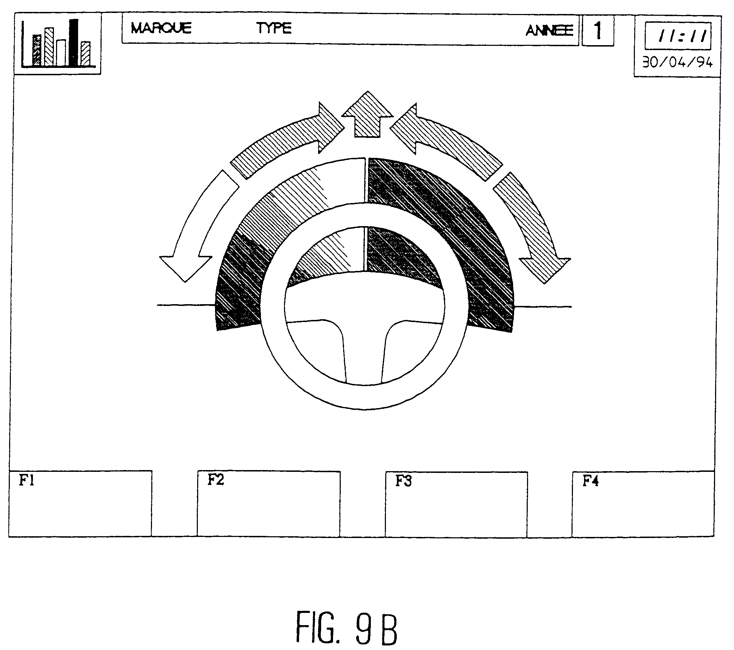

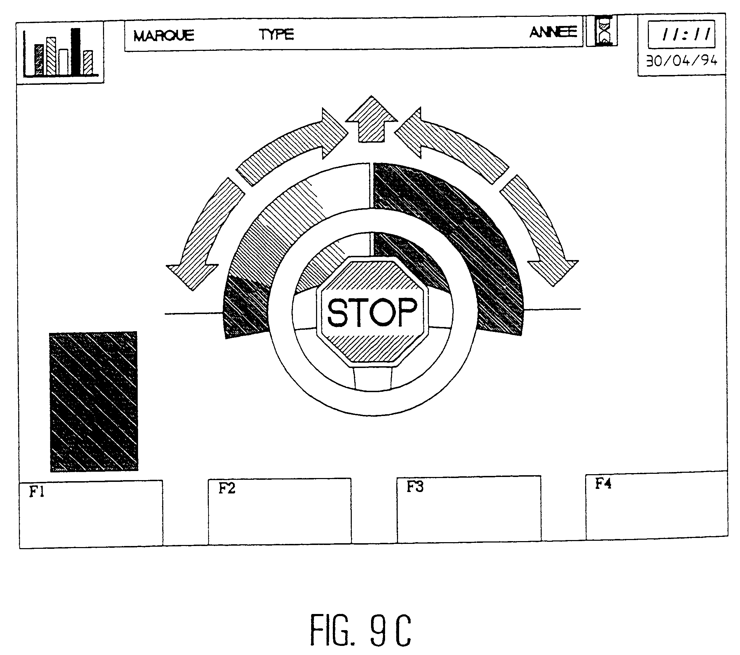

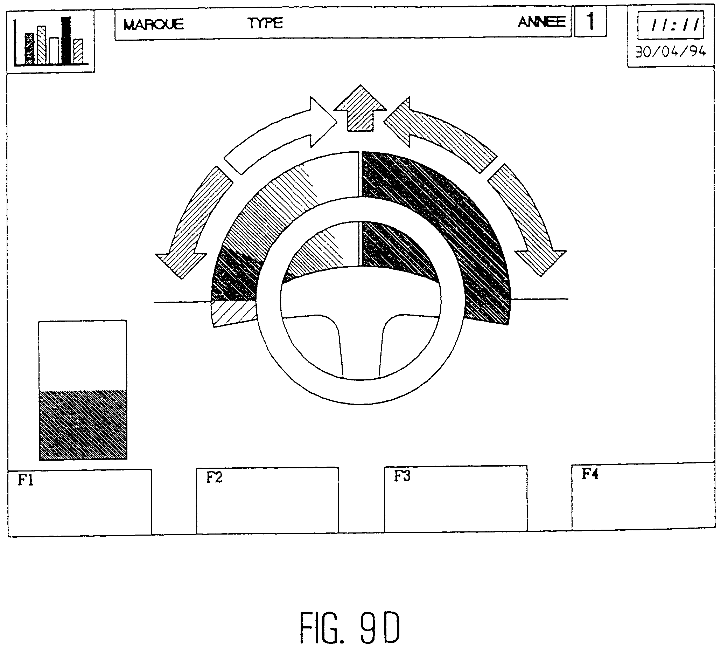

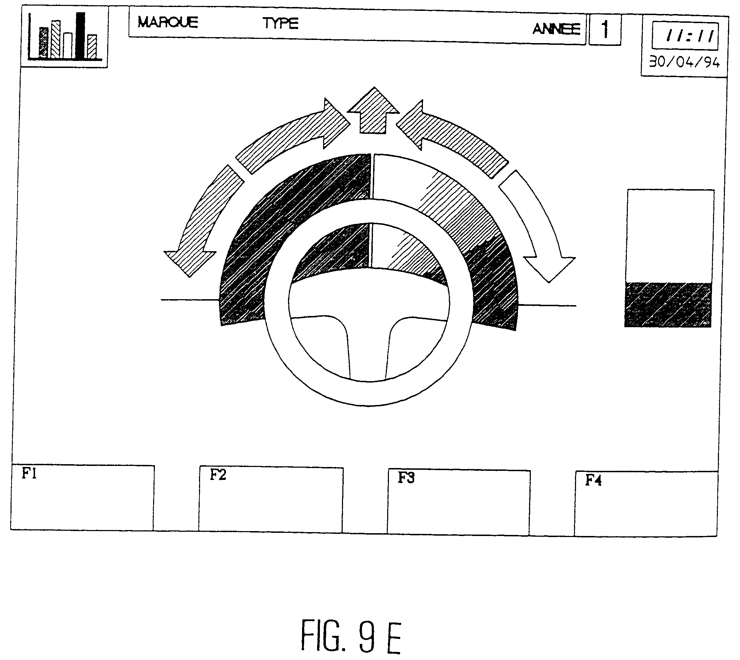

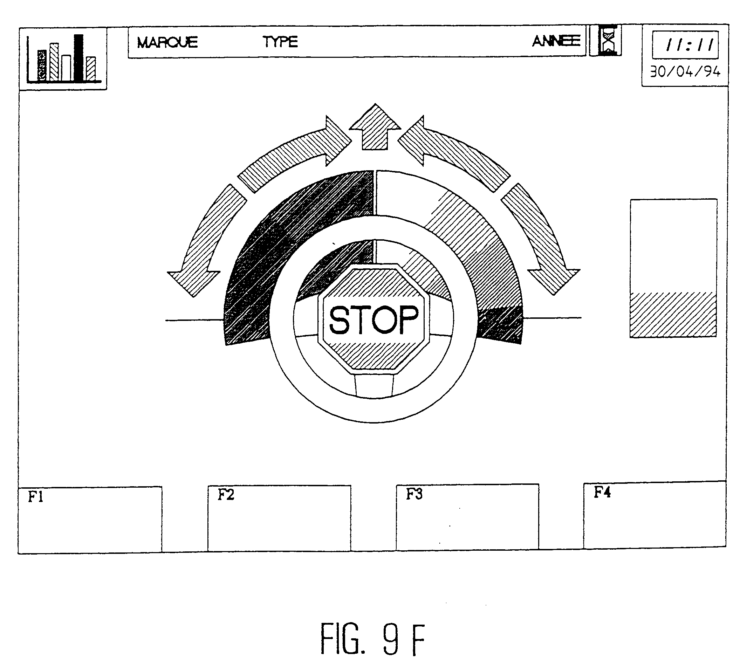

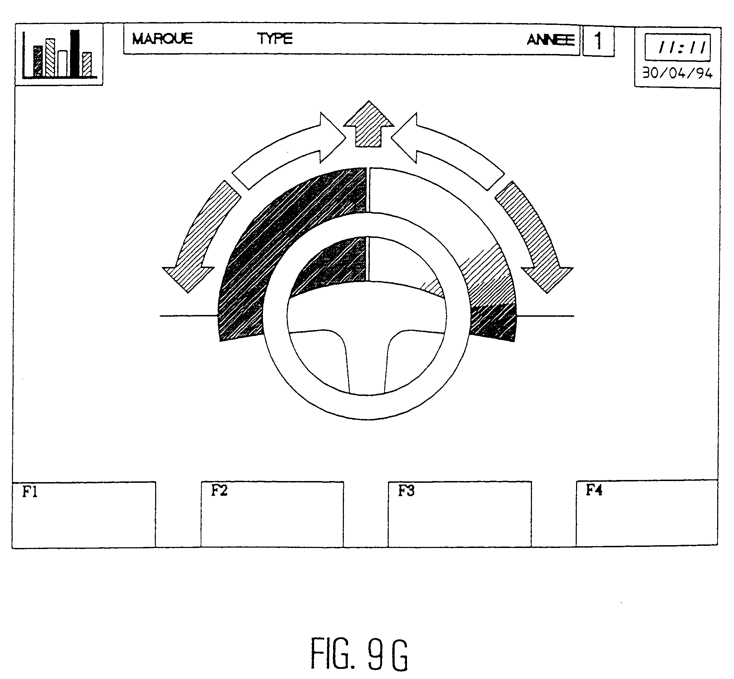

Le programme de BILAN géométrique comporte également la prédétermination de l'assiette en référence aux figures 8A et 8B. A cet effet, l'écran commandé par la base de données constructeur ou une base personnelle indique les mesures de hauteur de caisse à mesurer en des points A et B par exemple. Un système automatique ou semi-automatique mesure la hauteur de caisse et indique à l'opérateur la charge à répartir dans les divers sièges du véhicule pour obtenir les cotes de hauteur de caisse requises par le constructeur pour effectuer le contrôle géométrique du véhicule. A cet effet, l'image d'écran est animée et indique en continu la montée ou la descente de la caisse en fonction de la charge que l'opérateur place à l'intérieur et indique en même temps à l'écran les valeurs en millimètres des cotes de référence A et B. Lorsque les cotes de référence A et B prédéterminées correspondant à l'assiette de référence préconisée par le constructeur sont obtenues de façon satisfaisante, le programme BILAN passe automatiquement à l'étape suivante de braquage, dans laquelle un presse pédale est tout d'abord mis en place de manière à appliquer une pression suffisante sur la pédale de frein du véhicule. Les bras ou boîtiers de mesure sont ensuite positionnés à l'horizontale à l'aide respectivement de l'indication fournie par l'image animée 1 de la figure 9A et du niveau à bulle mobile référencé 2 sur cette figure et reproduisant la mesure effectuée par l'inclinomètre I. Cette opération de mise en place du presse pédale et la mise au niveau horizontal du boîtier ou bras étant effectuée, il est possible de contrôler, au moyen des icones inférieures F1, F2 ou F3 représentant l'état de parallélisme du véhicule, l'état des variations de parallélisme sur les roues avant, sur les roues arrière, sur les roues avant et arrière. La validation effectuée par l'opérateur conformément à l'indication de l'image 3 de la figure 9A produit immédiatement l'apparition de l'écran suivant qui indique à l'opérateur dans quel sens tourner le volant. Lors du braquage du volant (figure 9B) dans le sens correspondant à la flèche, l'angle de braquage est représenté par un secteur circulaire de couleur prédéterminée dont l'angle au centre correspond en temps réel à la valeur de l'angle de braquage on tourne le volant actionné par l'opérateur. En outre, au-delà d'un angle prédéterminé (par exemple 20°), l'écran d'affichage intime à l'opérateur l'ordre de ralentir en indiquant l'angle supplémentaire au moyen d'une couleur différente : ainsi, l'ordre de braquage est donné à l'opérateur non seulement en tant que valeur angulaire mais également en valeur de vitesse angulaire au voisinage de la butée de braquage. Lorsque l'angle de braquage requis par la page de données constructeur ou une autre base de données est atteint, un signal STOP (figure 9C) s'affiche au centre du volant et l'écran d'affichage indique à l'opérateur de braquer depuis l'angle de braquage maximal, par exemple à gauche, jusqu'à un angle (figure 9D) de braquage maximal à droite (figure 9E) en lui intimant également l'ordre de ralentir la vitesse de braquage (figure 9F) au voisinage d'un angle prédéterminé (20°). Pendant toutes les opérations, la position du volant est repérée en couleur angulairement à partir du zéro central. Après avoir effectué le braquage à gauche de 20° environ puis à droite de 40° environ depuis le braquage à gauche, l'opérateur remet son volant au centre sur indication de l'écran d'affichage (figure 9G).

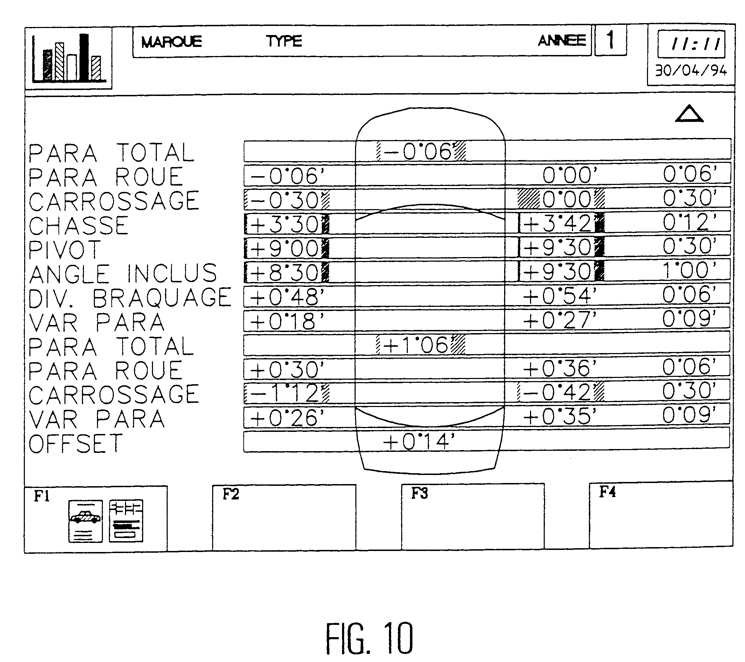

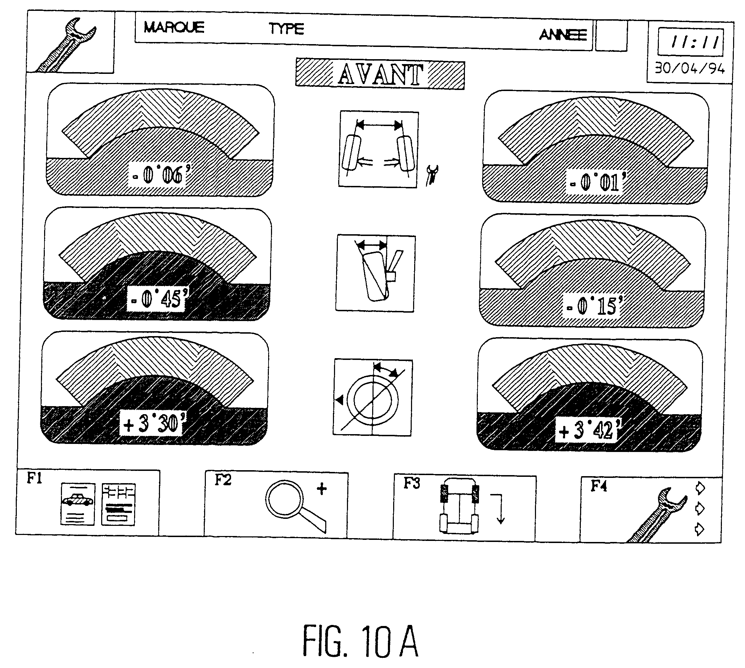

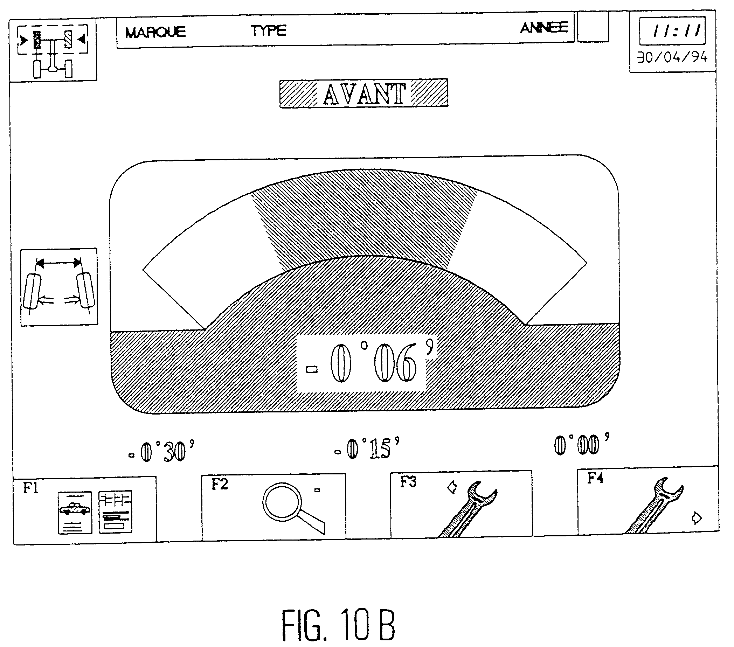

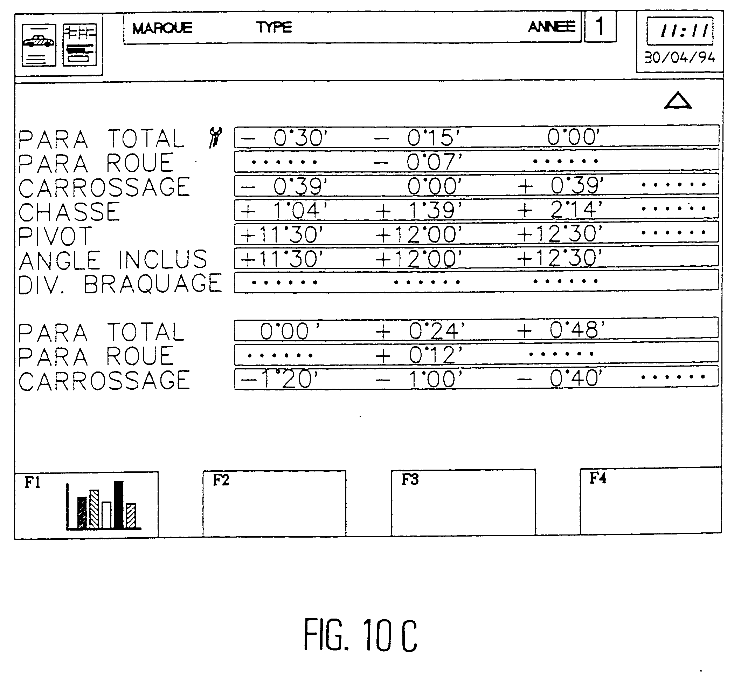

Après cette opération, l'acquisition des données effectuées par le dispositif selon l'invention apparaît automatiquement à l'écran conformément à la figure 10, qui représente l'indication d'au moins les angles de parallélisme total avant, parallélisme total arrière, parallélisme individuel de chaque roue avant ou arrière par référence à l'axe de symétrie ou l'axe de poussée géométrique du véhicule, carrossage, chasse, pivot, angle inclus, offset (différence angulaire entre l'axe de poussée géométrique et l'axe de symétrie), et éventuellement "setback avant" et "setback arrière" (décalage latéral d'une roue avant ou arrière dans le sens longitudinal). L'affichage de la figure 10 est effectué selon une indication colorée : de préférence, les angles mesurés ou calculés correspondant à la plage admissible d'après la base de données contenant les références du véhicule sont représentés en vert, tandis que les valeurs mesurées ou calculées de l'état physique du véhicule se situant en dehors de la base de données des caractéristiques du véhicule sont représentées en rouge et indiquent à l'opérateur qu'un REGLAGE sera nécessaire.

Aux fins de vérification, l'opérateur peut consulter immédiatement la base de données des caractéristiques du véhicule en appuyant sur la touche F1, ce qui déclenche immédiatement l'apparition d'un écran comportant les valeurs minimales et maximales admissibles ainsi que les valeurs nominales préconisées par le constructeur pour les caractéristiques géométriques du véhicule du type et de l'année modèle considérés. La base de données de référence contient également les valeurs de l'empattement, de la voie et des pressions des pneumatiques préconisées pour les véhicules en cours de contrôle, ce qui fournit à l'opérateur une indication supplémentaire sur les non-conformités ou les anomalies du véhicule considéré.

Dans le cas d'un réglage, l'opérateur retourne à l'écran d'affichage de la figure 6 et selectionne le programme REGLAGE, ce qui provoque immédiatement l'affichage de l'écran de la figure 10A, sur lequel les angles admissibles sont représentés sur fond vert et les angles dépassant les valeurs admissibles sont indiquées sur fond rouge. Bien entendu, l'invention s'applique également à tout autre code de couleurs utilisé pour représenter les mesures des caractéristiques géométriques du véhicule. La base de données constructeur affiche immédiatement l'indication des essieux susceptibles d'être corrigés, parce que possédant un réglage d'origine prévu par le constructeur. L'écran d'affichage 10A comporte une première ligne représentant le parallélisme de la roue avant gauche (- 0° 06') et de la roue avant droite (-0° 01'), de carrossage de la roue avant gauche (-0° 45') et de la roue avant droite (-0° 15'), l'angle de chasse de la roue avant gauche (+ 3° 30') et de la roue avant droite (+ 3° 42'). Dans le programme de REGLAGE, la touche F1 est pré-programmée pour appeler la base de données de référence, la touche F2 est programmée pour accomplir un agrandissement à volonté d'un des secteurs angulaires choisis, la touche F3. permet d'afficher alternativement les valeurs caractéristiques de l'essieu avant ou de l'essieu arrière et la touche F4 correspond à des indications de réglage qui sont décrites ci-après.

Après avoir appuyé sur la touche F2, l'agrandissement (figure 10B) du secteur supérieur droit qui correspond à l'angle de parallélisme de la roue avant gauche est agrandi et occupe sensiblement tout l'écran. La roue du véhicule correspondant à l'angle mesuré en temps réel est repérée par une couleur différente dans l'icône situé à l'extrémité supérieure gauche de l'écran d'affichage ; en outre, les indications extraites de la base de données du constructeur apparaissent à l'écran, à savoir la valeur minimale (-0° 30'), la valeur nominale (-0°15') et la valeur maximale (0°00') préconisées par le constructeur pour le véhicule du type considéré et de l'année modèle considérée. Grâce à cette fonction d'agrandissement, l'opérateur peut directement contrôler en temps réel l'évolution de l'angle mesuré pendant qu'il effectue les réglages de parallélisme de la roue avant gauche. Grâce aux touches à flèches du boîtier 31a solidaire de la roue avant gauche, l'opérateur peut commander directement l'unité centrale mobile (UC) sans quitter le voisinage de cette roue avant gauche. Par exemple, en appuyant sur la touche F3, l'opérateur peut consulter les valeurs mesurées de l'essieu arrière pour vérifier que tout réglage effectué sur l'essieu avant n'interfère pas avec l'essieu arrière tout en restant sur place à proximité de la roue avant gauche. La touche F4 permet d'accéder à des sous-programmes de REGLAGE particuliers référencés 511 à 524 sur l'organigramme général de la figure 5 : bien entendu, l'invention s'étend également aux cas de réglage combinés complémentaires comme le réglage des variations de parallélisme en fonction de l'assiette du véhicule. Les sous-programmes 511 à 524 correspondent sensiblement à des extraits de la figure 10A relatifs à la roue en cours de réglage et indiquent en temps réel à l'opérateur le sens (serrage ou desserrage, allongement ou raccourcissement) de l'opération à effectuer tout en indiquant simultanément à l'écran et en temps réel les mesures exactes obtenues par suite du réglage en cours.

Une fois le REGLAGE géométrique du véhicule effectué, le programme REGLAGE propose à l'opérateur de revenir au menu principal de la figure 6. Dans le cas où le réglage effectué a porté sur un angle comme l'angle de chasse pour lequel il faut effectuer un braquage des roues pour obtenir la mesure, le retour après le programme REGLAGE est effectué au programme BILAN pour permettre d'effectuer un nouveau BILAN afin de connaître précisément toutes les valeurs géométriques du véhicule, en particulier la valeur de l'angle de chasse qui résulte d'un calcul effectué à partir des mesures déterminées à l'aide des capteurs précités. Avantageusement, la représentation du BILAN géométrique du véhicule après REGLAGE (figure 10C) est sensiblement identique à la représentation de la figure 10.

Après avoir effectué le contrôle géométrique physique du véhicule, l'édition et la reproduction des mesures effectuées avant REGLAGE et après REGLAGE, des données correspondantes de la base des caractéristiques du véhicule contrôlé, des données générales d'identification du véhicule, du conducteur ou du propriétaire, de l'opérateur ayant effectué le contrôle géométrique peuvent être effectuées en tout ou en partie à l'aide de divers programmes de sélection qui sont appelés par appui de la touche F9 d'un clavier de commande 31 ou 31A. Ce programme d'édition de mesure et de données numériques ou alphanumériques, de graphiques ne sera pas détaillé plus avant dans le cadre de la présente demande. Lorsque les travaux de contrôle géométrique et de réglage à effectuer sur le véhicule sont terminés, que l'édition des données requises pour présentation au client est effectuée, qu'aucune autre tâche n'est à entreprendre en ce qui concerne le véhicule, l'opérateur appuie sur la touche F4 d'un clavier de commande 31 ou 31A, conformément à la représentation de la figure 6 représentant une touche F4 avec l'indication de sortie du véhicule.

A cet instant, la configuration générale de gestion des données et des mesures implantées dans le programme de l'unité centrale sous forme d'UTILITAIRES effectue automatiquement l'archivage (programme 65) du bilan avec identification du client et mémorisation du contrôle visuel. Cette opération permet ainsi d'engendrer progressivement une ou plusieurs bases de données relatives à la clientèle permettant d'accélérer encore les opérations de contrôle géométrique, tout au moins en ce qui concerne la saisie des informations d'IDENTIFICATION (premier programme) et de CHOIX DU VEHICULE (deuxième programme).

Le dispositif selon l'invention est également configuré pour effectuer un étalonnage des capteurs de mesure et un étalonnage du pont de levage ou de l'emplacement géométrique sur lequel reposent les roues du véhicule. A cet effet, on selectionne le programme de test de capteurs (programme 63) ou on selectionne le programme d'étalonnage (programme 66) qui permet de manière analogue à ce qui a été décrit pour les programmes généraux BILAN et REGLAGE de guider l'opérateur en lui indiquant les opérations à effectuer pour étalonner sans erreur les capteurs et mesurer les caractéristiques du pont de levage ou de l'emplacement géométrique sur lequel le véhicule repose en situation de contrôle géométrique.

Ainsi, grâce à l'invention, la productivité des opérations de contrôle géométrique et de réglage est grandement augmentée et ceci sans risque d'erreur en raison du fait qu'une représentation effectuée des paramètres et des mesures physiques est constamment affichée en temps réel à l'écran et correspond aux interventions de l'opérateur qui se rend par conséquent compte instantanément des réactions globales du véhicule et du dispositif à ses interventions.

En outre, le programme général dont l'organigramme est représenté à la figure 5 est particulièrement convivial en ce qu'il prévoit deux programmes de chaînage des opérations et de chaînage des réglages (programmes 613 et 614) qui permettent à l'opérateur de redéfinir des modules opératoires proprement dits visant à effectuer les mesures sur le véhicule ou à effectuer les réglages sur le véhicule et les modules concernant le traitement des données, de manière à permettre éventuellement de n'effectuer sur certains véhicules que des BILAN RAPIDE dans le cas où ces véhicules présentent des défauts caractéristiques bien connus ne justifiant que la mise en oeuvre de certaines mesures de caractéristiques géométriques ou que certains réglages. En outre, cette modularité et cette fonctionnalité permettent de choisir entre la mise en oeuvre manuelle de certaines étapes du procédé ou la mise en oeuvre automatique dès que l'opérateur dispose de moyens de mesure plus performants : par exemple, dans le cas où l'opérateur ne dispose pas de plateaux pivotants à rouleaux d'entraînement pour effectuer le dévoilage, l'opérateur effectue le dévoilage manuellement sur les indications de l'écran ; dès que l'opérateur dispose de ces plateaux de pivotement à rouleaux d'entraînement pour le dévoilage, il choisit l'option automatique à l'intérieur d'un programme de dévoilage principal.

Le gestionnaire de l'espace de contrôle géométrique dans lequel est installé le dispositif selon l'invention, dispose du programme d'ETALONNAGE auquel on accède à l'aide du clavier de commande par sélection de la mention ETALONNAGE.

A cet effet, une barre d'étalonnage de caractéristiques géométriques et dynamiques prédéfinies est avantageusement fournie avec le dispositif selon l'invention. L'écran d'affichage indique à l'opérateur de saisir le numéro d'identification de la barre d'étalonnage et le numéro de calibration usine de la barre d'étalonnage et ensuite d'effectuer la validation par appui sur la touche correspondante.

Grâce à cette barre d'étalonnage, il est possible d'effectuer l'étalonnage du zéro des inclinomètres, l'étalonnage du zéro des capteurs latéraux, l'étalonnage du zéro des capteurs transversaux, la vérification des gains des capteurs et l'étalonnage d'un ou plusieurs postes de travail dans leur intégralité.

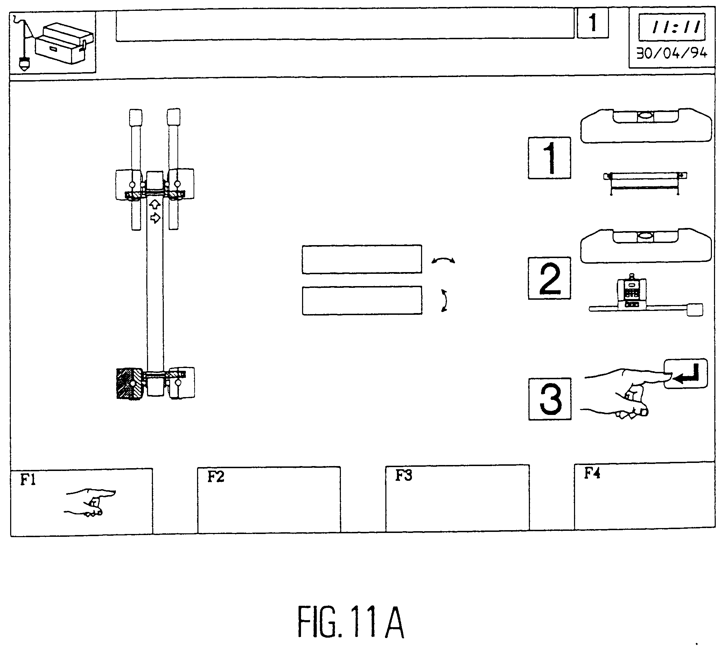

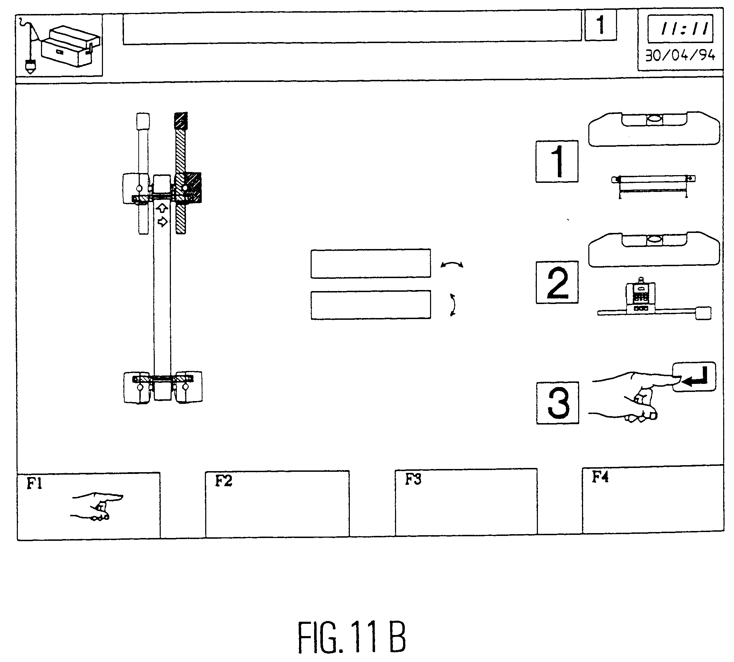

La figure 11A ou 11B guide l'opérateur pour effectuer l'étalonnage du zéro des inclinomètres :

1.- fixer un boîtier à la barre d'étalonnage et mettre la barre d'étalonnage de niveau,

2.- mettre le boîtier (figure 11A) ou le bras (figure 11B) à étalonner également de niveau et ensuite valider pour indiquer au dispositif selon l'invention que les opérations préalables ont été effectuées ; le dispositif selon l'invention effectue alors automatiquement l'étalonnage du zéro des inclinomètres en mesurant ces valeurs et en les mémorisant comme paramètres de calcul pour le calcul physique correspondant.

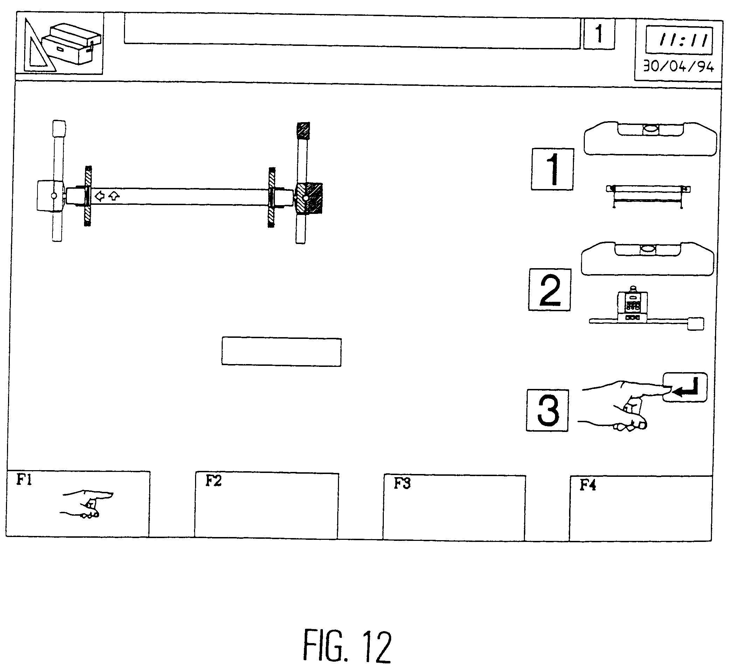

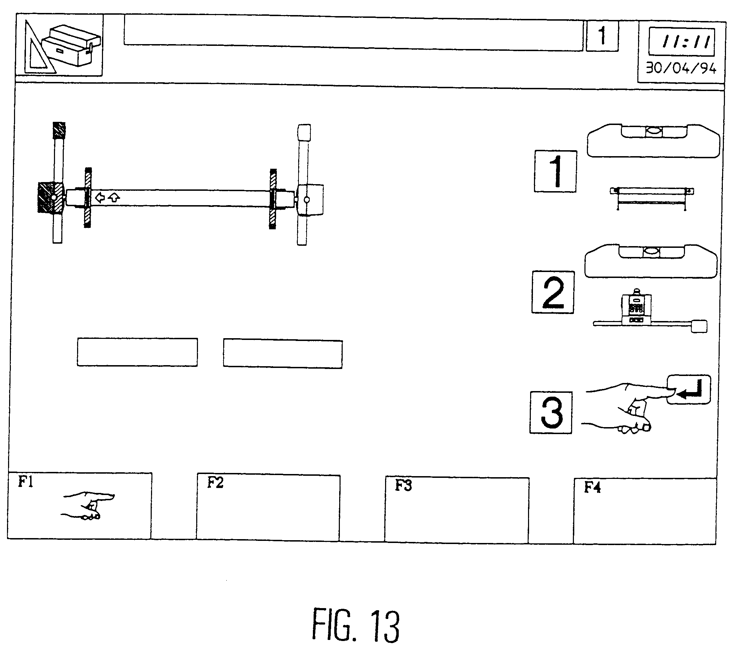

L'opérateur suit également les consignes représentées aux figures 12 et 13 de manière à effectuer l'étalonnage du zéro des capteurs transversaux.

L'opérateur effectue de manière analogue et au moyen d'indications analogues à l'aide de consignes données par les écrans d'affichage correspondant à la figure 12 l'étalonnage du zéro des capteurs latéraux.

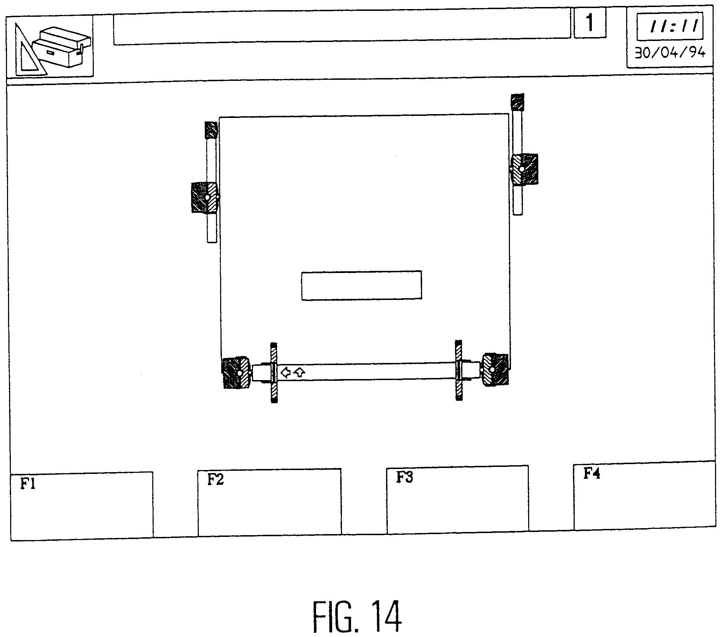

Pour effectuer la vérification des gains des capteurs, l'opérateur effectue conformément aux instructions de la figure 14 un montage complet des bras et des boîtiers sur un outil d'étalonnage fourni avec le dispositif selon l'invention. Après avoir effectué le montage de la figure 14, l'opérateur appuie uniquement sur la touche de validation et le dispositif selon l'invention effectue automatiquement la vérification des gains de tous les instruments de mesure du dispositif selon l'invention.

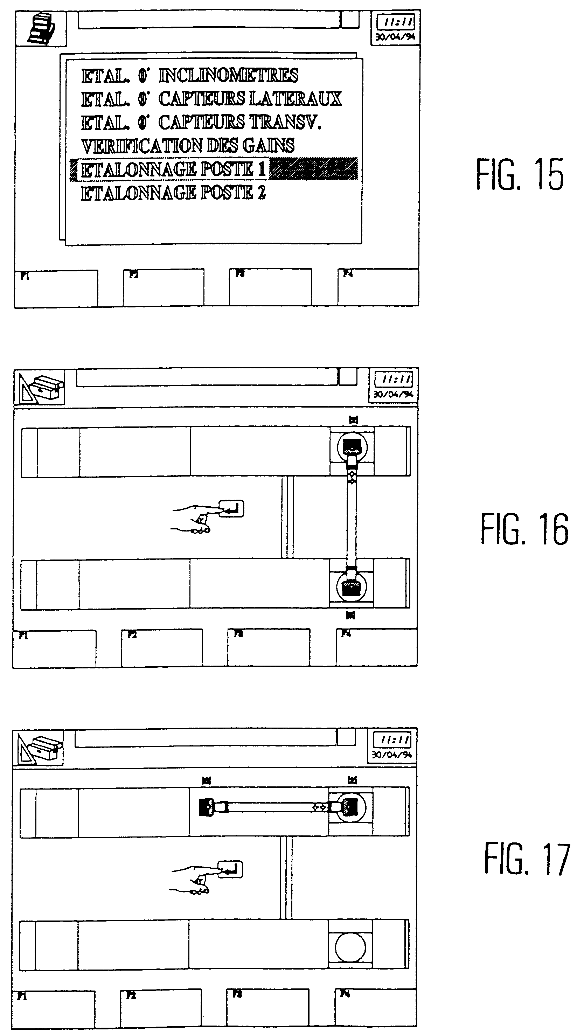

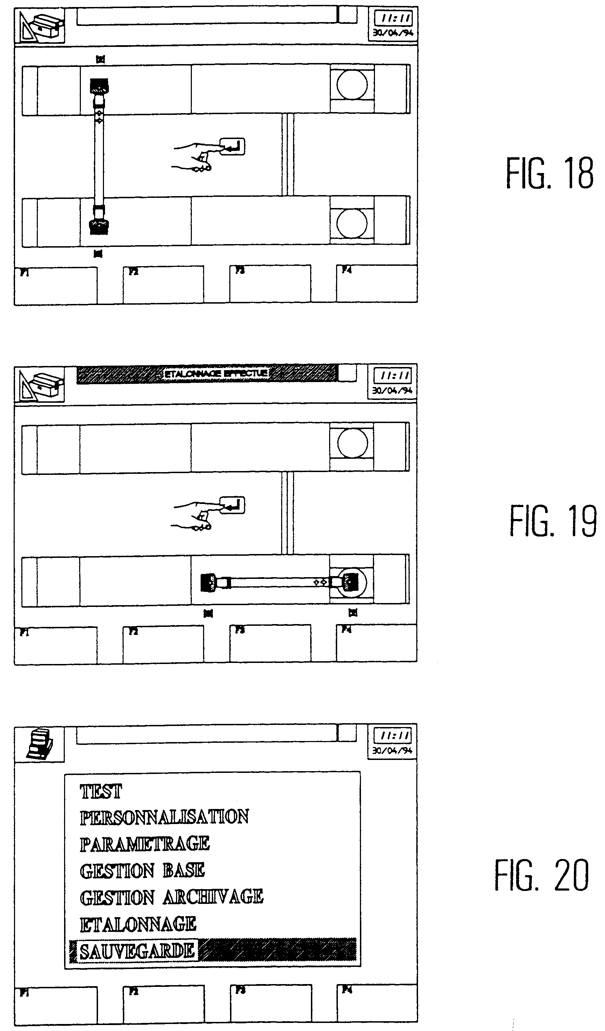

En cas de chocs dans le pont élévateur ou à intervalles périodiques prédéterminés, l'opérateur effectue également l'étalonnage complet du poste de travail, constitué en général par un pont élévateur apte à recevoir un véhicule à contrôler. Pour réaliser l'étalonnage du poste de travail, l'opérateur sélectionne le menu ou programme correspondant (figure 15) et effectue le montage représenté à l'écran conforme à la figure 16, puis il valide l'opération pour indiquer au dispositif selon l'invention qu'il a effectué l'opération indiquée ; ensuite, il met en place l'outil d'étalonnage conformément à la figure 17 longitudinalement d'un côté et il valide également pour indiquer au dispositif selon l'invention de procéder aux mesures correspondantes et les mémoriser ; enfin, il met en place l'outil d'étalonnage transversalement à l'emplacement des roues arrière (figure 18) et il valide également et enfin il met en place l'outil d'étalonnage longitudinalement sur la piste qui n'a pas été mesurée à l'aide du montage de la figure 19 et il achève de valider l'opération : le dispositif selon l'invention calcule alors automatiquement les caractéristiques du poste de travail ou pont élévateur apte à recevoir un véhicule à contrôler. Le dispositif selon l'invention archive sur commande (figure 20) toutes les valeurs de zéro des capteurs, d'étalonnage des gains et d'étalonnage du poste de travail ou pont élévateur, comme paramètres réels et effectue en conséquence les corrections nécessaires pour tenir compte de l'état géométrique du poste de travail ou pont élévateur et de l'état physique des capteurs.

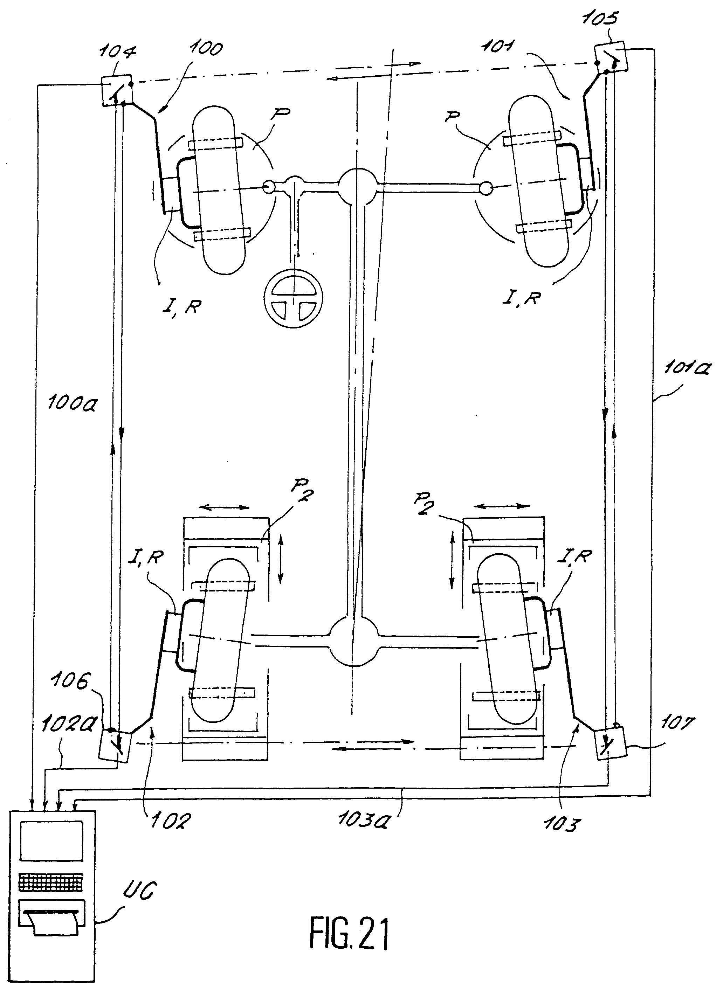

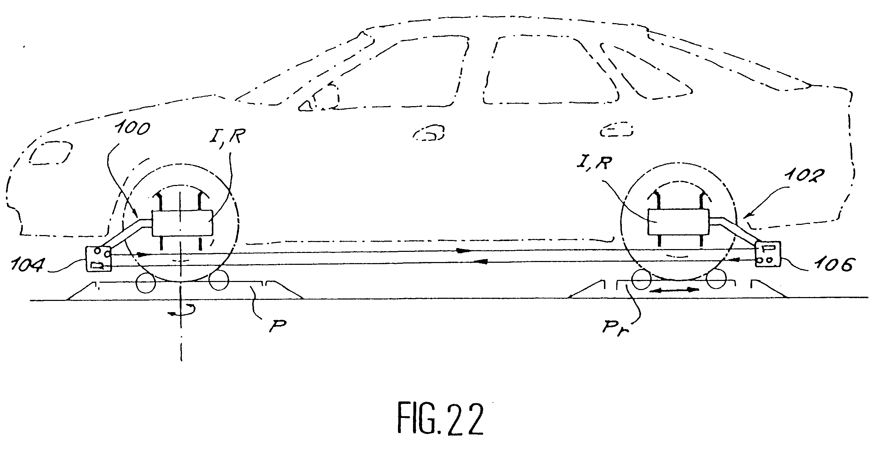

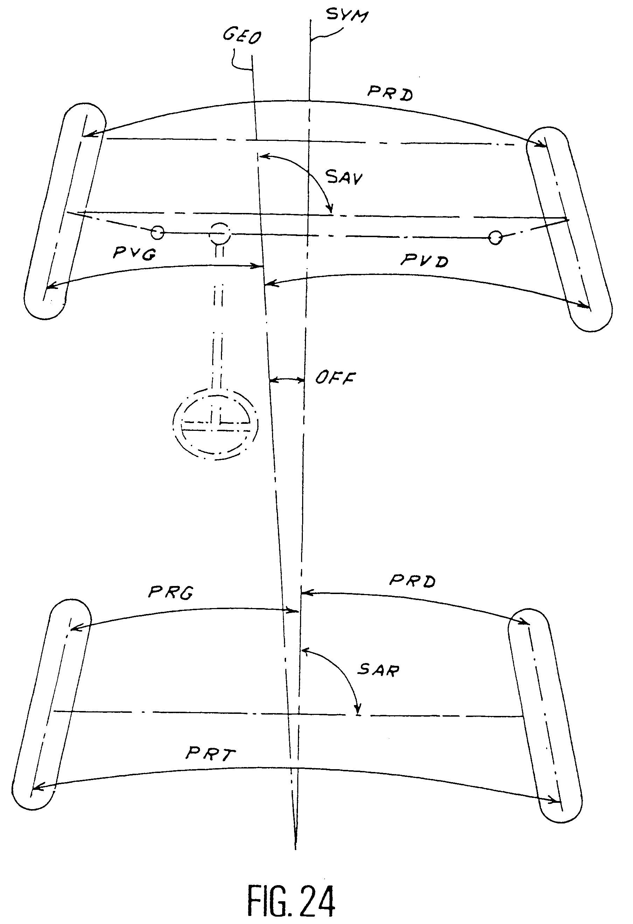

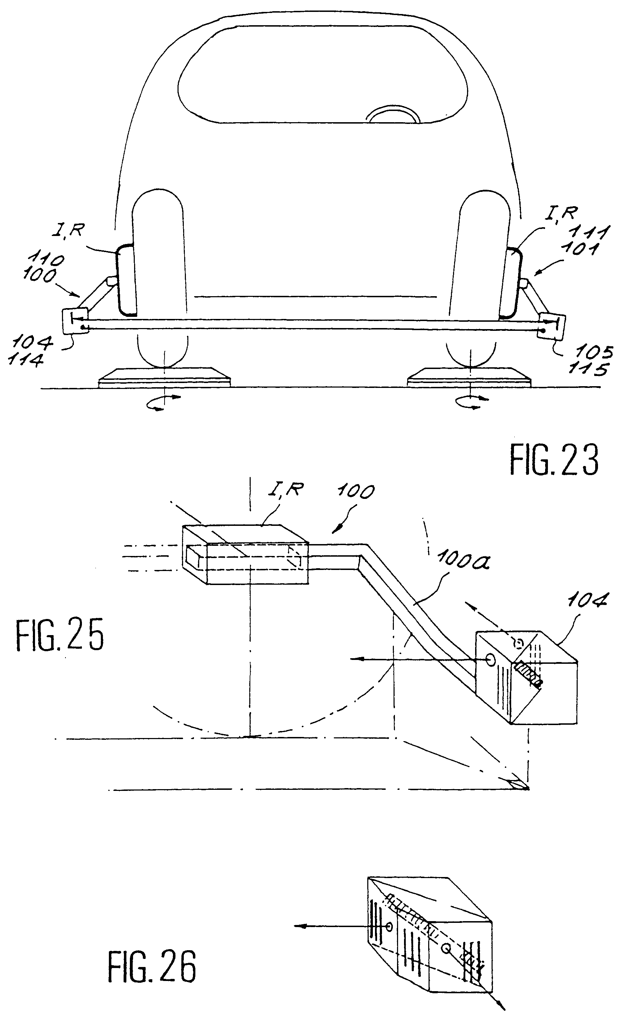

En référence aux figures 21, 22 et 23, un autre mode de réalisation du dispositif selon l'invention de contrôle géométrique de véhicule à roues est représenté en position montée sur un véhicule représenté schématiquement sur les figures 22 et 23 et représenté sans carrosserie sur la figure 21.

Le dispositif comporte une unité centrale UC analogue à celle décrite en référence à la figure 4 raccordée par des moyens de communication 100a, 101a, 102a, 103a à des bras de mesure 100, 101, 102 et 103. Les moyens de communication 100a à 103a sont représentés sur la figure 21, selon un réseau étoilé : bien entendu, l'invention s'applique à toute autre organisation du schéma de communication par liaison filaire ou sans fil (radio, rayonnement infrarouges, transmission sonore).

Chaque bras de mesure 100 à 103 comporte d'une part un boîtier fixé par des griffes sur la roue et contenant des circuits d'un inclinomètre I et de potentiomètre R décrits en référence à la figure 4 qui coopèrent avec des blocs-caméra placés à l'extrémité des bras 100 à 103 qui s'étendent vers l'extérieur du véhicule en avant des roues avant et en arrière des roues arrière. Chaque bloc-caméra 104 à 107 disposé respectivement à l'extrémité d'un support rigide d'un bras de mesure 100 à 103 est un bloc-caméra muni d'un récepteur optique multidirectionnel et d'une source d'émission lumineuse multidirectionnelle ou de deux sources d'émission lumineuse unidirectionnelle.

On dispose le récepteur optique, notamment un capteur du genre CCD, selon une direction faisant sensiblement un angle de 45° dans le plan horizontal avec l'axe longitudinal du véhicule. Cette disposition avantageuse permet ainsi d'économiser lors de la fabrication de cette variante de réalisation du dispositif quatre blocs de réception optique comprenant un capteur optique (du genre CCD) et une électronique associée. La discrimination des mesures dans le sens transversal et des mesures dans le sens longitudinal est réalisée simplement en adoptant un masque transversal comportant des fentes de largeur notablement différente de la largeur des fentes du masque longitudinal disposé sur une autre face du cube correspondant à la conformation d'un bloc-caméra 104 à 107 des figures 21 à 23. La discrimination des rayons lumineux incidents au moyen de fentes de largeur différente a été décrite en particulier dans la demande de brevet français 93 12059, non publiée.

Les blocs-caméra 104 et 107 sont montés espacés transversalement et longitudinalement des roues selon une distance transversale prédéterminée pour que le faisceau lumineux longitudinal en provenance du bloc-caméra 104 ne soit pas coupé par le pneumatique de la roue gauche lors d'un braquage à droite et pour que le faisceau lumineux longitudinal en provenance du bloc-caméra 105 ne soit pas coupé par le pneumatique de la roue droite lors d'un braquage à gauche et également, de manière connue en soi, selon une distance longitudinale correspondant sensiblement à la longueur du support rigide d'un bras de mesure suffisante pour que le faisceau lumineux ne soit pas coupé par les pneumatiques avant ou arrière des roues correspondantes ou ne rencontre pas un organe du genre spoiler, pare-chocs, etc. Grâce à cette variante de dispositif selon l'invention, le braquage pour la mesure des angles de chasse et de pivot est effectué sans difficulté pour des valeurs de braquage de 10° ou de 20°.

Selon une variante moins avantageuse de l'invention les sources d'émission lumineuse des blocs-caméra 104 à 107 n'émettent pas toutes simultanément, mais émettent, au contraire, séquentiellement : dans ce cas, il est possible d'adopter des largeurs de fente identiques pour les masques transversaux et longitudinaux, en raison du fait que la discrimination sera temporelle et non géométrique. De préférence, dans les deux cas, les blocs-caméras 104 à 107 sont disposés vers le bas par rapport à l'axe de la roue de sorte que le boîtier contenant un inclinomètre I et le potentiomètre R ne constitue pas un obstacle aux communications lumineuses entre boîtiers, aussi bien en position de direction centrée qu'en position de braquage maximal à droite ou à gauche.

Sur les figures 21 et 22, on a représenté une plaque de pivotement P comportant deux rouleaux d'entraînement pour le dévoilage automatique de chaque roue, ainsi que des plaques de débattement Pr comportant également des rouleaux d''entraînement en rotation des roues arrière pour le dévoilage. Cette disposition décrite en référence aux figures précédentes est également applicable à cette variante de réalisation.

Selon une autre variante de réalisation applicable à tous les dispositifs faisant l'objet de la présente demande, les dispositifs comportent des moyens de démarrage à distance ou de téléchargement pour le chargement à distance d'informations en provenance d'une banque de données : ces moyens de démarrage à distance permettent de laisser l'unité centrale en position active, même en l'absence de véhicule, ce qui permet à un client désirant prendre un rendez-vous de téléphoner directement à l'unité centrale en fournissant au moyen d'un code personnalisé des références client et véhicule, de sorte que, à l'arrivée du client dans son véhicule, le dispositif peut démarrer automatiquement des opérations de bilan ou de réglage sans aucune perte de temps nécessitée par la prise d'informations ou l'identification du véhicule ; également, en cas de doute, le téléchargement permet de saisir à distance des informations en provenance d'une banque de données d'un constructeur automobile pour saisir des défauts caractéristiques d'un type de véhicule donné ; enfin, le dispositif peut comporter un sous-programme de gestion du temps de travail permettant d'effectuer le démarrage à distance à une heure prédéterminée et l'arrêt du travail à une heure prédéterminée, de sorte que l'utilisation du dispositif est entièrement gérée à distance en évitant ainsi tout risque d'utilisation frauduleuse.

Selon encore une autre variante de réalisation de l'invention, les dispositifs comportent des moyens de télédiagnostic ou de télémaintenance, pour la prise d'informations sur l'état du dispositif par des moyens techniques de télécommunication (téléphone, télécopie, télex, télétexte, interrogation et commande vocale) ou pour la fourniture d'instructions de dépannage ou de réglage afin de remédier à une anomalie particulière référencée par la banque de données du constructeur du dispositif : ces moyen de télédiagnostique ou de télémaintenance peuvent comporter également des moyens télématiques ou des moyens de masse interactive du type CDROM ou CDI (compact disque interactif).

La figure 24 représente un schéma géométrique des caractéristiques géométriques de parallélisme du véhicule que l'on peut obtenir aisément au moyen d'équations de type connu grâce à cette variante de dispositif selon l'invention.

Les angles de parallélisme avant gauche PVG et avant droit PVD, de "setback avant" SAV (décalage avant) par rapport à l'axe de géométrie, de parallélisme total avant PRD, de parallélisme arrière gauche PRG, arrière droit PRD et "setback arrière" SAR (décalage arrière) par rapport à l'axe de symétrie, de parallélisme total arrière et de décalage OFF de l'axe de géométrie par rapport à l'axe de symétrie sont représentés par rapport au référentiel usuel constitué par l'axe de géométrie GEO et l'axe de symétrie SYM. Bien entendu, l'unité centrale UC peut, sur simple appui d'un bouton de commande, changer de référentiel et recalculer les angles par rapport à un axe choisi définissable par rapport au véhicule.

En référence à la figure 25, un bras de mesure de type 100 est mécaniquement séparable en deux parties : une première partie constituant un boîtier contenant un inclinomètre I et un potentiomètre R et une deuxième partie constituée par le support rigide du bloc-caméra 104 et du bloc-caméra 104 lui-même. Le support 100a est de préférence déconnectable électriquement et mécaniquement de manière simultanée, lorsque l'on sépare le bras 100a du boîtier fixé par une griffe à la jante de la roue. Ainsi, il n'est pas nécessaire de défaire les griffes et les boîtiers contenant les potentiomètres R et les inclinomètres I pour changer la caméra 104, car il suffit simplement de l'extraire du boîtier en utilisant une fixation amovible du genre baïonnette ou par encliquetage. Comme on le verra ci-après, cette disposition permet de passer facilement d'une configuration de bras orientés vers l'extérieur à une configuration de bras orientés vers l'intérieur du véhicule.

La figure 26 représente un bloc caméra d'un boîtier qui comporte plusieurs masques à fente ou lentilles de définition d'image sur un récepteur optique, notamment un capteur CCD et trois masques à fente comportant chacun trois fentes, disposés de part et d'autre de sources d'émission lumineuse émettant des faisceaux actifs transversaux et longitudinaux.

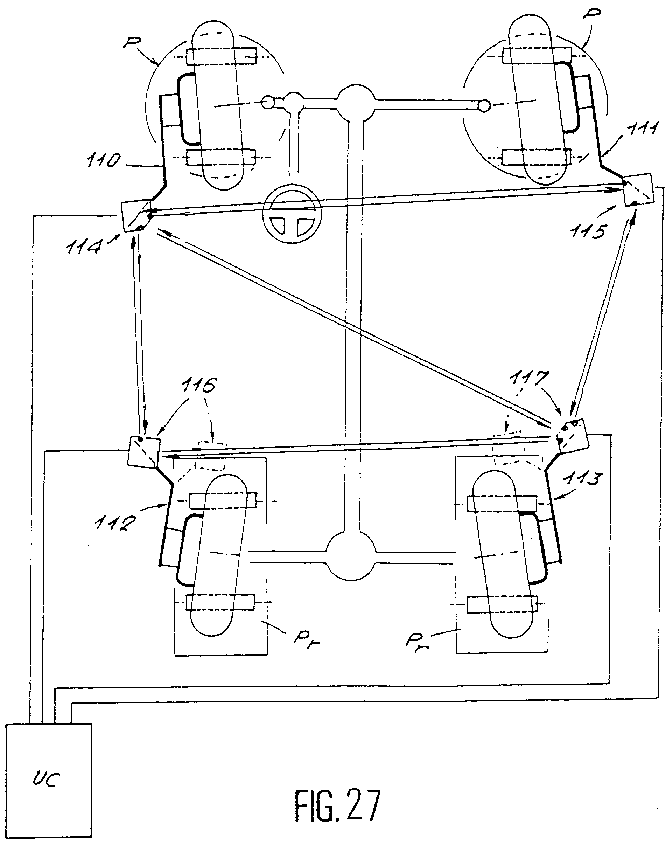

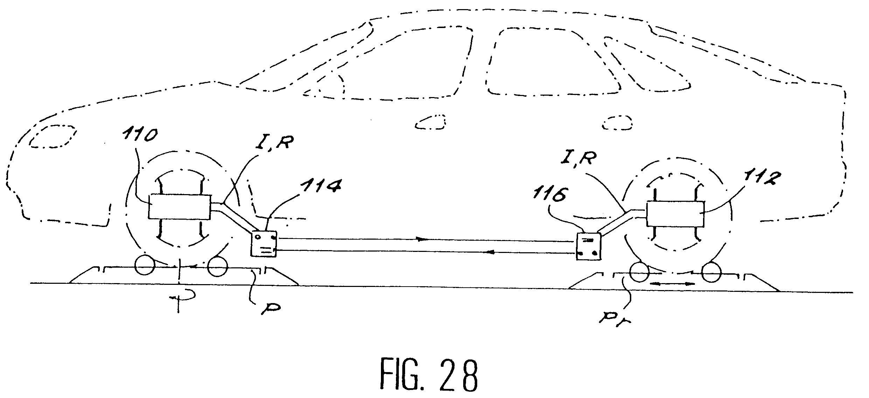

En référence aux figures 27, 28 et 23, un autre dispositif selon l'invention comporte des bras 110 à 113 disposés vers l'intérieur du véhicule, au bout desquels sont disposés des blocs-caméra 114 à 117 aptes à communiquer optiquement entre eux ou à effectuer des mesures géométriques non seulement angulaires mais également des mesures de distance selon au moins une diagonale du quadrilatère défini par les blocs-caméra 114 à 117.

La demande de brevet français 93.12059, non publiée décrit le principe général des mesures dimensionnelles pouvant être obtenues à l'aide d'un bloc-caméra à plusieurs fentes.

Connaissant ce principe de mesure physique, l'homme du métier effectuera par de simples calculs géométriques la détermination des distances entre les blocs-caméra et obtiendra ainsi non seulement des caractéristiques de parallélisme, mais également des caractéristiques de voie et d'empattement du véhicule permettant en particulier de contrôler les caractéristiques dimensionnelles des essieux ou la bonne fixation des roues aux essieux du véhicule.

Sur la figure 27, les bras 110 à 113 sont disposés de telle sorte que les caméra 114 à 117 soient disposées à l'intérieur des roues du véhicule dans le sens dans le sens longitudinal mais extérieurement transversalement.

On peut également, comme représenté en traits pointillés pour les blocs-caméra 116 et 117 solidaires des roues arrière du véhicule, disposer les bras 112 et 113 de telle sorte que les blocs-caméra 116 117 soient disposés à la fois intérieurement longitudinalement et intérieurement transversalement : cette disposition réduit encore la taille du quadrilatère défini par les blocs-caméra 114 à 117 et augmente d'autant la précision de mesure, en particulier de mesure dimensionnelle.

De préférence, cette disposition est particulièrement utilisée lorsque l'on dispose d'un pont élévateur comportant des plaques de support de roues surélevées de manière à ménager un passage des chemins d'action des blocs-caméras sous le véhicule ou alternativement, pour le passage des blocs-caméras 114 à 117 eux-mêmes, comme représenté, à titre d'exemple en traits pointillés, pour les blocs-caméras 116 et 117 .

De préférence, le pont élévateur comportant des plaques de support de roues surélevées est également muni de rouleaux d'entraînement susceptibles de venir au contact des roues du véhicule pour assurer un dévoilage automatique: ces rouleaux peuvent être fixés à demeure sur des plaques de pivotement P ou des plaques de débattement Pr ou alternativement peuvent être escamotés lors du pivotement des plateaux de pivotement P comportant une sortie de signal électrique représentatif de l'angle de braquage de l'essieu avant ou peuvent être escamotés dans les plaques de débattement Pr après dévoilage des roues arrière du véhicule.

Pour passer d'une position 116 représentée en traits pointillés à une position 116 représentée en traits pleins, on prévoit qu'un bloc-caméra 116 ou 117 est monté mécaniquement de façon à pouvoir tourner de 90° ou de 180°, de manière à présenter toujours une face de réception optique active lors du montage d'un dispositif selon l'invention à l'aide d'éléments modulaires comportant des blocs-caméra déconnectables, verrouillables, encliquetables ou détachables mécaniquement et électriquement d'un support rigide ou d'un boîtier de connexion comme représenté à la figure 25 : l'homme du métier déterminera sans difficulté les montages mécaniques permettant de présenter le bloc-caméra de manière à réaliser une communication optique avec un autre bloc-caméra en regard.

Les blocs-caméra 114 à 117 en regard chacun des trois autres sont avantageusement du type représenté à la figure 26.

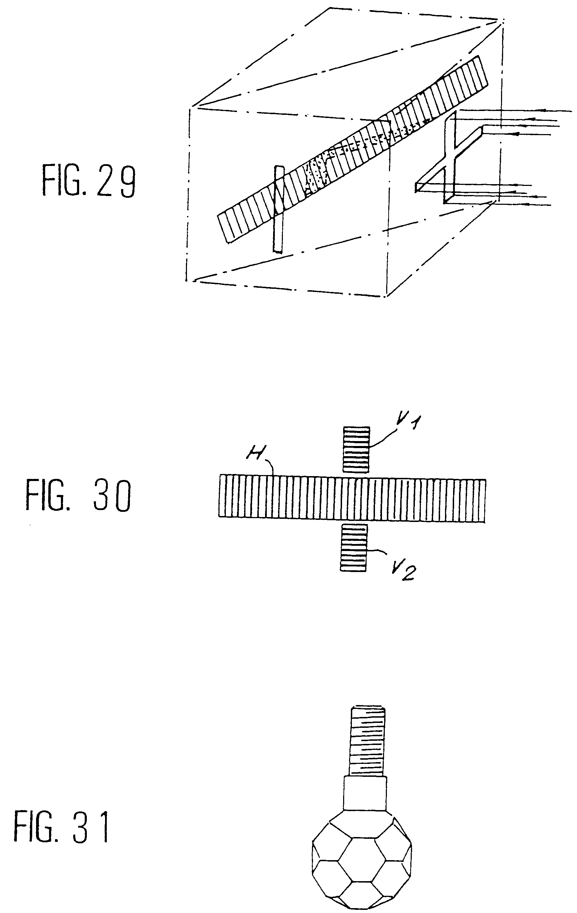

La figure 29 représente un autre mode de réalisation de bloc-caméra selon l'invention : un des masques comporte deux fentes de largeur inégale formant une croix, ce qui permet la mesure simultanée des angles dans le plan horizontal et dans le plan vertical ; en disposant une pluralité de fentes verticales et une pluralité de fentes horizontales, la largeur des fentes horizontales étant notablement différentes de la largeur des fentes verticales, on obtient ainsi des mesures à la fois angulaires et dimensionnelles selon la verticale et selon l'horizontale au moyen d'un unique capteur de type CCD ou équivalent.

La figure 30 représente un cas particulier de capteur CCD comprenant trois barrettes linéaires formant une croix, une barrette horizontale H et deux barrettes verticales V1 et V2 : dans cette variante avantageuse de l'invention, on peut utiliser des fentes disposées selon une seule direction prédéterminée ; cette direction peut être horizontale ou verticale mais peut également être inclinée, ce qui améliore grandement la précision des mesures réalisables grâce à l'invention de manière analogue à ce qui est expliqué dans la description de la demande de brevet français 93 12059 précitée.

Grâce à cette construction modulaire des blocs-caméras enfichables avec ou dans des bras-support 100a, il est possible de construire un grand nombre de quadrilatères à l'aide de modules du type représenté à la figure 25. En raison du fait que chaque bloc-caméra pourrait ainsi occuper trois positions différentes, les positions vers l'intérieur du véhicule engendrent dix quadrilatères différents, dont deux sont sensiblement voisins d'un parallélogramme, deux sensiblement voisins d'un trapèze et deux autres sensiblement voisins d'un rectangle, et on constate qu'il existe au moins quatre autres quadrilatères correspondant à au moins une position extérieure d'un bloc-caméra. Par conséquent, il existe au moins dix quadrilatères aptes à être construits à l'aide de blocs-caméras modulaires par simple encliquetage mécanique et électrique simultané, ce qui permet, sur un véhicule donné, de mesurer avec une très grande précision, en corrélant les erreurs éventuelles, les caractéristiques du châssis du véhicule.

L'invention n'est pas limitée aux calculs dimensionnels de précision de la direction, des essieux ou du châssis du véhicule, mais s'applique également au contrôle dimensionnel proprement dit du véhicule, notamment au contrôle dimensionnel des carrosseries de véhicules. En effet, en dissociant les supports 100a portant des blocs-caméra des boîtiers solidaires des jantes des roues, on dispose les supports 100a à des emplacements prédéterminés extérieurs au véhicule et solidaires du poste de travail selon une base de référence fixe prédéterminée.

Bien que la triangulation dimensionnelle soit possible à l'aide uniquement de trois blocs-caméra, on peut avantageusement utiliser les quatre blocs-caméra d'un dispositif selon l'invention, et, en particulier, des blocs-caméra comportant des masques avec deux fentes formant une croix, tels que celui de la figure 29. En disposant ainsi ces blocs-caméra particuliers de la figure 29 sur des emplacements prédéterminés correspondant à des coordonnées géométriques relatives connues (pouvant être vérifiées et étalonnées périodiquement à l'aide d'un programme d'étalonnage faisant partie d'un dispositif selon l'invention), on mesure dans le plan vertical et dans le plan horizontal la position d'un point de référence de la carrosserie indiqué par le constructeur.

Le point de référence de la carrosserie se situe au sommet d'un tétraèdre ou d'une pyramide dont la base est constituée par un triangle défini par trois blocs-caméra ou par un quadrilatère défini par quatre blocs-caméra. Pour repérer précisément la position du point de référence, on prévoit de fixer en ce point de référence un rétroréflecteur à plusieurs facettes tel que celui représenté à la figure 31 qui renvoie les rayons incidents dans la direction d'émission, de sorte que le masque présentant une croix définit sur le CCD conformément à la figure 29 l'image d'une croix déterminant simultanément l'angle de site horizontal et l'angle de site vertical du rétroprojecteur positionné de manière invariable au point de référence prédéterminé par le constructeur.

L'invention présente ainsi l'avantage considérable de procurer un outil polyvalent permettant à la fois d'effectuer le contrôle géométrique du véhicule et le contrôle dimensionnel des caisses ou carrosseries de véhicule : ainsi, les spécialistes du contrôle et de la réparation automobile ont simplement à prévoir un référentiel de base pour encliqueter des supports 100a munis de blocs-caméra, ou pour encliqueter ces blocs-caméra eux-mêmes et n'ont pas besoin de moyens de contrôle additionnels de l'art antérieur pour effectuer le contrôle dimensionnel des carrosseries.

Ceci résulte en une précision améliorée, mais également en une économie considérable due à la suppression d'un dispositif de l'art antérieur de contrôle dimensionnel de carrosserie de véhicule.

L'invention décrite en référence à plusieurs modes de réalisation particuliers n'y est nullement limitée, mais couvre au contraire toutes modifications de forme et toutes variantes de réalisation fonctionnellement équivalentes dans le cadre et dans l'esprit de la présente invention : en particulier, une ou plusieurs sources d'émission lumineuse peuvent être remplacées par un miroir plan réfléchissant un rayonnement lumineux dans une certaine direction, par un rétroréflecteur permettant la détection de points géométriques particuliers.

## Revendications

1.- Dispositif de contrôle géométrique de véhicules à roues, du type comportant au moins deux boîtiers en regard l'un de l'autre et comportant chacun au moins une source d'émission lumineuse et au moins un récepteur optique situé derrière un moyen de définition d'image du genre fente ou lentille et sensible au rayonnement de la source d'émission lumineuse de l'autre boîtier en regard caractérisé en ce que la source d'émission lumineuse (12) d'un premier boîtier définit avec le récepteur optique (13) du deuxième boîtier en regard une première zone spatiale (A) active, la source d'émission lumineuse (8) dudit deuxième boîtier définit avec le récepteur optique (14) dudit premier boîtier une deuxième zone spatiale (B) active et en ce que les deux dites zones spatiales actives (A, B) sont séparées par un espace (C) de largeur prédéterminée (d) pour permettre un fonctionnement simultané des deux boîtiers sans interférence mutuelle.

2.- Dispositif selon la revendication 1, caractérisé en ce que, à l'intérieur de chaque boîtier, une source d'émission lumineuse (8 ou 12) et un récepteur optique (13 ou 14) sont montés sur un corps commun (3) conformé pour définir une fenêtre d'émission lumineuse et pour définir une chambre (7) munie d'un masque de définition d'image (2 ou 15).

3.- Dispositif selon la revendication 2, caractérisé en ce que la source (8) d'émission lumineuse fait partie d'un bloc (4) d'émission lumineuse comportant un circuit électronique d'alimentation et de commande , et en ce que le récepteur optique (13) fait partie d'un bloc (5) de réception optique comportant un circuit électronique de traitement du signal engendré par la réception lumineuse.

4.- Dispositif selon l'une des revendications précédentes, caractérisé en ce que le dispositif comporte une unité centrale (25, UC) reliée par des moyens de communication à des boîtiers (21, 22 ; 40, 41) ou des bras (26, 27 ; 42, 43) de mesure, dont chacun comporte un clavier de commande (31a) permettant la commande de l'unité centrale (UC) depuis le boîtier (40, 41) ou le bras (42, 43) correspondant,

5.- Dispositif selon la revendication 4, caractérisé en ce que au moins un boîtier (40, 41) ou au moins un bras (42, 43 ; 100, 101 ; 110, 111) est relié à, et communique avec un plateau (P) de pivotement de roue fournissant un signal de sortie électrique représentatif de la position angulaire d'une roue de véhicule,

6.- Dispositif selon la revendication 5, caractérisé en ce que : au moins un plateau (P) de pivotement comporte une paire de rouleaux d'entraînement de roue de véhicule, aptes à entraîner ladite roue en rotation de manière à effectuer automatiquement le dévoilage lors du fonctionnement du dispositif.

7.- Dispositif selon l'une des revendications précédentes, caractérisé en ce que le dispositif comporte deux boîtiers (40, 41) de mesure fixés aux roues avant du véhicule et deux bras de mesure (42, 43 ; 100, 101 ; 110, 111) fixés aux roues arrière du véhicule.

8.- Dispositif selon l'une des revendications 1 à 6, caractérisé en ce que le dispositif comporte quatre bras de mesure (42, 43 ; 100, 101 ; 110, 111) fixés chacun à une roue du véhicule,

9.- Dispositif selon l'une des revendications précédentes, caractérisé en ce que : les moyens de commande (31 ou 31a) du dispositif sont disposés d'une part (31) sur l'unité centrale (25, UC) et d'autre part (31a) sur chaque moyen de mesure (21, 22, 26, 27 ; 42, 43 ; 100, 101; 110, 111) fixé aux roues du véhicule et les moyens de commande (31a) solidarisés aux roues du véhicule comportent une commande de dévoilage.

10.- Dispositif selon l'une des revendications précédentes, caractérisé en ce que le dispositif est programmable et contient un programme résident conformé en arborescence (figure 5) pour, notamment, l'exécution automatique de mesures physiques, la production d'instructions opératoires interactives et l'étalonnage automatique des appareils de mesure.

11.- Dispositif selon la revendication 10, caractérisé en ce que le dispositif comporte un écran (30) de visualisation, dont l'affichage est géré par ledit programme résident (figure 5), de manière à fonctionner en boucle fermée par émission en temps réel d'instructions opératoires de contrôle géométrique et par réception et affichage en temps réel des mesures physiques et des valeurs calculées en provenance des bras ou des boîtiers de mesure, de manière à indiquer l'état instantané du véhicule contrôlé et du dispositif en réponse aux opérations exécutées en suivant la prescription des instructions opératoires.

12.- Dispositif la revendication 10 ou la revendication 11, caractérisé en ce que le dispositif comporte des moyens de communication d'information gérés par ledit programme résident, de manière à fonctionner en boucle fermée par émission en temps réel d'instructions opératoires de contrôle géométrique et par réception et communication en temps réel de mesures physiques et de valeurs calculées en provenance de bras ou de boîtiers de mesure, de manière à communiquer l'état instantané du véhicule contrôlé et du dispositif en réponse aux opérations exécutées en suivant la prescription des indications opératoires.

13.- Dispositif selon la revendication 12, caractérisé en ce que lesdits moyens de communication comportent des moyens de transmission sonore.

14.- Dispositif selon la revendication 12 ou la revendication 13, caractérisé en ce que lesdits moyens de communication comprennent une commande vocale interactive.

15.- Dispositif selon l'une des revendications précédentes, caractérisé en ce que le dispositif comporte quatre bras de mesure (100, 101, 102, 103 ; 110, 111, 112, 113) dont chacun est solidarisé à une roue du véhicule, et dont un bras au moins comporte un bloc-caméra (104-107, 114-117, figure 25, figure 26, figure 29) muni d'un récepteur optique multidirectionnel et d'une source d'émission lumineuse multidirectionnelle ou de plusieurs sources d'émission lumineuse unidirectionnelles.

16.- Dispositif selon la revendication 15, caractérisé en ce que deux bras de mesure (26, 27 ; 42, 43; 100-103) sont disposés vers l'extérieur du véhicule.

17.- Dispositif selon la revendication 15 ou la revendication 16, caractérisé en ce que deux bras de mesure (110-113) sont disposés vers l'intérieur du véhicule.

18.- Dispositif selon la revendication 15 ou la revendication 17, caractérisé en ce que quatre bras de mesure (110-113) sont disposés vers l'intérieur du véhicule.

19.- Dispositif selon la revendication 18, caractérisé en ce que le dispositif mesure en outre des valeurs géométriques d'angles ou de distances selon au moins une diagonale du quadrilatère défini par les blocs-caméras (114-117).

20.- Dispositif selon l'une des revendications 17 à 19, caractérisé en ce que le véhicule est disposé sur un pont élévateur comportant des plaques (P, Pr) de support de roue surélevées pour le passage des chemins d'action des blocs-caméras (104-107, 114-117) sous le véhicule, ou alternativement pour le passage des blocs-caméras eux-mêmes (figures 22, 23 et 28).

21.- Dispositif selon l'une des revendications 15 à 20, caractérisé en ce qu'au moins un bras de mesure (100-103, 110-113) est séparable du boîtier fixé à la roue pour être fixé à nouveau à un autre boîtier d'une roue ou de l'autre côté du même boîtier, de manière à disposer un bras de mesure (100-103, 110-113) à volonté vers l'intérieur ou l'extérieur du véhicule en fonction de l'encombrement général du véhicule.

22.- Dispositif selon l'une des revendications précédentes, caractérisé en ce qu'au moins un boîtier (104-107, 114-117, figure 1, figure 26, figure 29) comporte plusieurs masques à fentes ou lentilles de définition d'image sur un récepteur optique, notamment un capteur CCD.

23.- Dispositif selon l'une des revendications précédentes, caractérisé en ce que le dispositif comporte des moyens de démarrage à distance ou de téléchargement pour le chargement à distance d'informations en provenance d'une banque de données.

**24.**- Dispositif selon l'une des revendications précédentes, caractérisé en ce que le dispositif comporte des moyens de télédiagnostic ou de télémaintenance, pour la prise d'informations sur l'état du dispositif par des moyens techniques de télécommunication ou pour la fourniture d'instructions de dépannage.

**25.**- Procédé de contrôle géométrique de véhicules à roues à l'aide d'un dispositif selon l'une des revendications 1 à 24, comportant plusieurs des étapes suivantes :

a) saisir des informations d'identification (1, figure 5) de véhicule et/ou de client,

b) activer une base de données (2, figure 5) contenant des caractéristiques techniques de véhicules et valider les informations correspondant au véhicule à contrôler,

c) effectuer un contrôle visuel et saisir, (3, figure 5),

d) mettre en place et fixer à demeure aux roues du véhicule des boîtiers de mesure ou des bras de mesure,

e) effectuer un bilan géométrique (4, figure 5) comportant un dévoilage (figure 7) assisté par ordinateur, une correction d'assiette assistée (figure 8A, figure 8B) par ordinateur, un centrage de la direction assisté par ordinateur et un braquage d'essieu direct ou assisté (figure 9A - figure 9G) par ordinateur de manière à déterminer automatiquement le bilan (figure 10) géométrique du véhicule.

**26.**- Procédé selon la revendication 25, caractérisé en ce que le dévoilage est effectué automatiquement par commande de rouleaux d'entraînement en rotation de roue de véhicule.

**27.**- Procédé selon la revendication 25 ou la revendication 26, caractérisé en ce que la correction d'assiette est effectuée automatiquement par des organes de traction et de maintien agissant sur la carrosserie du véhicule.

**28.**- Procédé selon l'une des revendications 25 à 27, caractérisé en ce que le braquage du volant est commandé par l'ordinateur selon une variation angulaire de braquage prédéterminée dans un sens donné (figure 9B) et dans le sens opposé (figure 9D, figure 9E) audit sens donné.

**29.**- Procédé selon la revendication 28, caractérisé en ce que le braquage du volant est commandé selon une vitesse de variation angulaire de braquage prédéterminée (figure 9C, figure 9F) au voisinage des extrémités de la plage totale de braquage.

**30.**- Procédé selon l'une des revendications 25 à 29, caractérisé en ce qu'un bilan géométrique (figure 10) est automatiquement communiqué à l'opérateur par des moyens techniques de communication (30) sur achèvement de l'étape e).

**31.**- Procédé de contrôle géométrique de véhicule, selon la revendication 25, comportant plusieurs des étapes suivantes :

f) effectuer un dévoilage (figure 7) assisté par ordinateur et une correction d'assiette assistée (figure 8A, figure 8B) par ordinateur,

g) régler des caractéristiques physiques et géométriques du véhicule en étant assisté par des instructions communiquées par un ordinateur qui communique simultanément des informations représentatives (figure 10A, figure 10B) des variations desdites caractéristiques physiques et géométriques en temps réel pendant ledit réglage.

**32.**- Procédé selon la revendication 31, caractérisé en ce qu'on règle notamment le décalage des roues de l'essieu avant ("setback avant") ou le décalage des roues de l'essieu arrière ("setback arrière").

**33.**- Procédé selon la revendication 31 ou la revendication 32, comportant en outre les étapes d'étalonnage (figure 11A - figure 13) assisté par ordinateur des zéros des capteurs et de vérification assistée (figure 14) par ordinateur des gains des capteurs.

**34.**- Procédé selon l'une des revendications 30 à 33, comportant en outre des étapes d'étalonnage assisté (figure 15 - figure 19) par ordinateur des caractéristiques géométriques du pont de levage ou poste de travail supportant le véhicule.

**35.**- Procédé selon l'une des revendications 25 à 34, à l'aide d'un dispositif comportant au moins un bloc-caméra (104-107, 114-117, figure 26, figure 29) à plusieurs masques ou plusieurs fentes ou plusieurs moyens de définition d'image, comportant en outre des étapes de mesure et de contrôle dimensionnel de véhicule, en particulier de contrôle dimensionnel de carrosserie du véhicule.

**36.**- Procédé selon la revendication 35, dans lequel on solidarise au moins trois blocs-caméras (104-107, 114-117, figure 26, figure 29) à une base de référence prédéterminée.

**37.**- Procédé selon la revendication 35 ou la revendication 36, caractérisé en ce qu'on utilise au moins un bloc-caméra (figure 29) comportant un masque portant deux fentes définissant une croix, de manière à mesurer les angles et les distances suivant l'horizontale et suivant la verticale.

**38.**- Procédé selon l'une des revendications 36 ou 37, caractérisé en ce qu'on étalonne l'environnement du véhicule, pour choisir une base de référence ou alternativement pour vérifier la géométrie d'une base de référence prédéterminée.

**39.**- Procédé selon l'une des revendications 35 à 38, caractérisé en ce qu'on fixe un émetteur lumineux en relation fixe connue par rapport à un point de référence à contrôler.

**40.**- Procédé selon l'une des revendications 35 à 39, caractérisé en ce qu'on fixe un rétroréflecteur (figure 31) de forme polyédrique en relation fixe connue par rapport à un point de référence à contrôler.

FIG.1

EP 0 679 865 A1

FIG. 2

FIG. 3

FIG. 4

1 Identification — véhicule / client

2 Choix véhicule — marque — année — modèle

3 Contrôle visuel

4 Bilan — 41a dévolage / 41b — 43a assiette / 43b assiette / 43c assiette / 43d tableau de charge — 44 centrage / 45 voir para — 46 braquage — 47 visu bilan / 48 visu base

5 Réglage — 41a dévolage / 41b — 43a assiette / 43b assiette / 43c assiette / 43d tableau de charge — 511 para G.D.T / setback / 512 para / car / chasse G / 513 para / car / chasse D / 514 car / chasse / 515 para / car / chasse / 516 autres réglages avant — 521 para G.D.T / offset / 522 para / car / 523 para / car / offset / 524 autres réglages avant

6 Utilitaires — 61 personnalisation — 611 pub écran / 612 pub ticket / 613 chaînage opérations / 614 chaînages réglages / 615 bilan / 616 contrôle visuel — 6161 autres produits

62 paramétrage

63 tests capteurs — 631 tests PC

64 gestion base de données — 641 création / 642 modification / 643 suppression

65 gestion archivage — 651 visualisation / 652 impression / 653 impression et purge

66 étalonnage — 661 étalonnage des 0 inclinomètres / 662 étalonnage des 0 capteurs latéraux / 663 étalonnage des 0 capteurs transversaux / 664 étalonnage des gains / 665 étalonnage poste 1 / 661 étalonnage autre poste

67 sauvegarde

68 S.A.V — 681 configuration / 682 personnalisation / 683 étalonnage / 684 historique

FIG. 5

31 — F1 F2 F3 F4 / ☐ ↓ ↑ ↰ / ? ↵

31a — F1 F2 F3 F4 / ☐ ↓ ↑ ↰ / ? ◎ ↵

| | 11:11 |
| --- | --- |
| | 30/04/94 |

IDENTIFICATION

CHOIX DU VEHICULE

CONTROLE VISUEL

BILAN

REGLAGE

F1

F2

F3

F4  EXIT

FIG. 6

FIG. 7

| | MARQUE | TYPE | | ANNEE | 1 | 11:11 |
|---|---|---|---|---|---|---|
| | | | | | | 30/04/94 |

$$A = 166 + 10 - 7\,mm$$

$$B = 237 + 10 - 7\,mm$$

F1      F2      F3      F4

# FIG. 8 A

EP 0 679 865 A1

FIG. 8 B

26

FIG. 9 A

FIG. 9 B

FIG. 9 C

EP 0 679 865 A1

FIG. 9 D

30

MARQUE    TYPE    ANNEE  1    11:11
30/04/94

F1    F2    F3    F4

FIG. 9 E

FIG. 9 F

FIG. 9 G

| | MARQUE | TYPE | | ANNEE | 1 | **11:11** 30/04/94 |

| | | △ |
| --- | --- | --- |
| PARA TOTAL | | −0˚06' | |
| PARA ROUE | −0˚06' | | 0˚00' | 0˚06' |
| CARROSSAGE | −0˚30' | | 0˚00' | 0˚30' |
| CHASSE | +3˚30' | | +3˚42' | 0˚12' |
| PIVOT | +9˚00' | | +9˚30' | 0˚30' |
| ANGLE INCLUS | +8˚30' | | +9˚30' | 1˚00' |
| DIV. BRAQUAGE | +0˚48' | | +0˚54' | 0˚06' |
| VAR PARA | +0˚18' | | +0˚27' | 0˚09' |
| PARA TOTAL | | +1˚06' | |
| PARA ROUE | +0˚30' | | +0˚36' | 0˚06' |
| CARROSSAGE | −1˚12' | | −0˚42' | 0˚30' |
| VAR PARA | +0˚26' | | +0˚35' | 0˚09' |
| OFFSET | | +0˚14' | |

| F1 | F2 | F3 | F4 |

## FIG. 10

FIG. 10 A

MARQUE     TYPE                        ANNEE          11:11
                                                      30/04/94

AVANT

-0°06⁹

-0°30⁹            -0°15⁹              0°00⁹

| F1 | F2 | F3 | F4 |

FIG. 10 B

| | MARQUE | TYPE | ANNEE | 1 | 11:11 |
| | | | | | 30/04/94 |

△

| PARA TOTAL ⚒ | − 0˙30' | − 0˙15' | 0˙00' | |
| PARA ROUE · | · · · · · · | − 0˙07' | · · · · · · | |
| CARROSSAGE | − 0˙39' | 0˙00' | + 0˙39' | · · · · · · |
| CHASSE | + 1˙04' | + 1˙39' | + 2˙14' | · · · · · · |
| PIVOT | +11˙30' | +12˙00' | +12˙30' | · · · · · · |
| ANGLE INCLUS | +11˙30' | +12˙00' | +12˙30' | |
| DIV. BRAQUAGE | · · · · · · | · · · · · · | · · · · · · | |

| PARA TOTAL | 0˙00' | + 0˙24' | + 0˙48' | |
| PARA ROUE | · · · · · · | + 0˙12' | · · · · · · | |
| CARROSSAGE | − 1˙20' | − 1˙00' | − 0˙40' | · · · · · · |

| F1 | F2 | F3 | F4 |

## FIG. 10 C

FIG. 11 A

FIG. 11 B

FIG. 12

FIG. 13

FIG. 14

FIG. 15

FIG. 16

FIG. 17

FIG. 18

FIG. 19

FIG. 20

FIG.21

FIG.22

EP 0 679 865 A1

FIG. 24

FIG.23

FIG.25

FIG.26

FIG.27

FIG. 28

FIG. 29

FIG. 30

FIG. 31

Office européen
des brevets

**RAPPORT DE RECHERCHE EUROPEENNE**

Numero de la demande

EP 95 40 0933

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO-A-81 00909 (HUNTER ENGINEERING COMPANY) * page 7 - page 18; figures 3-6,9 * | 1-4,15 | G01B11/275 |
| A | | 22,25, 37,39 | |
| | --- | | |
| A | US-A-4 336 658 (D.B. JANUARY ET AL) * abrégé; figures 1-5 * | 1,9-12, 25 | |
| | --- | | |
| A | FR-A-2 570 178 (FMC CORPORATION) * abrégé * * page 5 - page 6; figures 1-3,7-9,15 * | 1,13,25, 35 | |
| | --- | | |
| A | US-A-4 594 789 (J.A. MARINO ET AL) * abrégé; figures 1,4 * | 1,22,25 | |
| | --- | | |
| A | US-A-4 154 531 (T.E. ROBERTS,JR. ET AL) * abrégé; figures 4,4A * | 1,40 | |
| | ----- | | DOMAINES TECHNIQUES RECHERCHES (Int.Cl.6) |
| | | | G01B |

Le présent rapport a été établi pour toutes les revendications

| Lieu de la recherche | Date d'achèvement de la recherche | Examinateur |
|---|---|---|
| BERLIN | 11 Juillet 1995 | Vorropoulos, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)